# EUROPEAN PATENT APPLICATION

(11) **EP 4 517 879 A1**
(43) Date of publication of application: **05.03.2025**
(21) Application number: 23802448.3
(22) Date of filing: 17.02.2023
(51) Int. Cl.: H01M 4/505, H01M 4/525

(54) **LITHIUM NICKEL MANGANESE OXIDE POSITIVE ELECTRODE MATERIAL, PREPARATION METHOD THEREFOR AND APPLICATION THEREOF**

(30) Priority: 11.05.2022 CN 202210512168
(71) Applicant: Ningbo Ronbay New Energy Technology Co., Ltd., Yuyao Ningbo, Zhejiang 315402 (CN)
(72) Inventor: CHEN, Yu, Ningbo, Zhejiang 315402 (CN); SANG, Chunyuan, Ningbo, Zhejiang 315402 (CN); HUANG, Tao, Ningbo, Zhejiang 315402 (CN); WU, Bin, Ningbo, Zhejiang 315402 (CN); YAN, Xufeng, Ningbo, Zhejiang 315402 (CN); LIU, Rui, Ningbo, Zhejiang 315402 (CN); LEE, Jonghee, Ningbo, Zhejiang 315402 (CN); SUN, Hui, Ningbo, Zhejiang 315402 (CN); YOU, Sangyul, Ningbo, Zhejiang 315402 (CN)
(74) Representative: Bandpay & Greuter
(86) International application number: PCT/CN2023/076974
(87) International publication number: WO 2023/216672

(57) **Abstract**

The present application discloses a lithium nickel manganate positive electrode material, a preparation method therefor and an application thereof. The lithium nickel manganate positive electrode material has a molecular formula of Li_{α}Ni_{β}Mn_{2-β}M_{γ}O_{4-δ}/N, where 0.95≤α≤1.1, 0.4≤β≤0.6, 0.0005≤γ≤0.02, 0≤δ≤0.2, M is a single-crystal dispersing element, and M is at least one of V, Nb, Ta, Mo or W; N represents a coating layer, and the coating layer includes a P compound and/or an Al compound, and a coating amount of N is 500-10000ppm. In the present application firstly by means of adding a small amount of a single-crystal dispersing element (V, Nb, Ta, Mo or W), a high-voltage nickel manganese material having good dispersity of single crystals is prepared to make it have smaller specific surface area; furthermore, by means of uniformly coating the P compound and/or the Al compound to the lithium nickel manganate positive electrode material having high dispersity of single crystals, the direct contact between the positive electrode material and an electrolyte, which leads to oxidative decomposition, is avoided, thereby improving the stability of material, and thus improving the cycle performance of battery.

## Description

The present application claims priority to Chinese Patent Application No. 202210512168.5, entitled "LITHIUM NICKEL MANGANATE POSITIVE ELECTRODE MATERIAL, PREPARATION METHOD THEREFOR AND APPLICATION THEREOF", and filed with the China National Intellectual Property Administration on May 11, 2022, which is hereby incorporated by reference in its entirety.

### TECHNICAL FIELD

The present application belongs to the technical field of positive electrode materials of lithium batteries, and specifically relates to a lithium nickel manganate positive electrode material and a preparation method therefor and an application thereof.

### BACKGROUND

High-voltage nickel manganese positive electrode material LiNi_{0.5}Mn_{1.5}O₄ contains no cobalt element, which is cost-effective and environmentally friendly, being considered to be an extremely promising next-generation positive electrode material of lithium battery. Compared with olivine-like lithium iron phosphate (LiFePO₄, abbreviated as LFP), spinel-type high-voltage nickel manganese having three-dimensional lithium ion channels has a better rate and low-temperature performance; and has a single-battery energy density of 235-250Wh/kg, which is increased by 30-40% compared with LFP, but Wh (Watt-hour) cost thereof is close to or slightly lower than that of LFP.

Therefore, in view of the situation that LFP power batteries have broad market, low energy density, and severely shrink during cruising in winter, power batteries having high-voltage nickel manganese positive electrode material are developed for replacing LFP based on the technical route of increasing the energy density of power batteries and reducing costs, which have great advantages and are expected to be applied in electric vehicles with short and medium range.

However, the average working voltage of high-voltage nickel manganese is >4.7V (vs. Li+). Since the working voltage is relatively high, there is currently no commercially available 5V window electrolyte, resulting in that the electrolyte is susceptible to be decomposed in the use of high-voltage nickel manganese in a full cell and thus Mn element is precipitated, thereby leading to swelling and cycle fading of the full cell. This limits commercial application thereof.

In order to solve corresponding problems, as for material segments the following may be considered: (1) a single-crystallized high-voltage nickel manganese material may be prepared; the high-voltage lithium nickel manganate material having good dispersity of single crystals has excellent electrochemical performance due to advantages of small specific surface area, few interface side reactions, few gas generation, and less stress cracks, good mechanical properties, and controllable crystal face exposure; (2) the high-voltage nickel manganese material may be coated to inhibit the precipitation of Mn and isolate the contact between the positive electrode material and the electrolyte so as to alleviate the decomposition of the electrolyte, this further solve the problems of gas generation and capacity fade of the high-voltage nickel manganese in a full cell.

In terms of the preparation of single-crystallized high-voltage nickel manganese materials, it is more technically difficult to synthesize single crystal materials with excellent dispersity of single crystals compared with secondary ball materials. Generally, the dispersity degree of single crystals may be controlled by adjusting physical and chemical indicators of precursors, controlling the sintering process for the positive electrode, etc. Patent CN 109461925 A introduces the addition of a small amount of doping elements having fluxing property such as Na, Si, Ba, Sr, F, Cl, etc. as well as lattice-strengthening elements such as Al, Mg, La, Ce, etc. during the sintering process of a nickel-cobalt-manganese single crystal ternary material, which may form low-melting-point melt-promoting compounds with lithium in the oxidative sintering reaction, thereby reducing thermal stress for crystal formation, promoting grain boundary to move, and allowing crystal growth more uniform and complete, and thus it may be easier to form single crystals. However, the high-voltage nickel manganese material is in a spinel-type structure, which is essentially different from the structure of nickel-cobalt-manganese ternary layered structure materials. Dispersing elements of ternary materials cannot be directly used as dispersing elements for single crystals of the high-voltage nickel manganese material.

In order to improve the dispersity of single crystals of materials, methods such as increasing the sintering temperature, or performing post-processing for air-flow dispersion may also be used. However, these methods have complex processes and high energy consumption, which also partially affects the performance of materials. By improving physical and chemical indicators of a precursor, dispersity effect of single crystals is better, because for example the precursor that has a larger specific surface area, is loosened, and has a lower tap density is easier to be burn into single crystals. However, in industrial production, the precursor of high-voltage nickel manganese material has a high Mn content. If a special precursor having a large specific surface area (30m²/g), being loosened, and having a low tap density (0.8g/cm³) is prepared, a slurry of the precursor is viscous and is prone to blocking a thickener when the thickener is used. Therefore, the process is difficult to be amplified, and thus the subsequent mass production process is directly impacted. Therefore, in order to meet the need of subsequent production amplification, commonly used precursors with moderate specific surface area (20m^{2/}g) and moderate tap density (1.2g/cm³) are prepared in the current precursor process.

Furthermore, in terms of coating, at present, the surface of a lithium nickel manganate material is uniformly coated with a layer of oxide or phosphate, solid electrolyte and other fast ion conductors to mainly achieve performance improvement. The uniform and high coating method may isolate the direct contact between the positive electrode material and the electrolyte, inhibiting the decomposition of the electrolyte. Phosphate has better thermodynamic stability and ionic conductivity, and is capable of generating lithium phosphate, manganese phosphate and other substances on the surface of the positive electrode material. Such substances are relatively stable at high voltage and may be effectively used as a coating layer for high-voltage positive electrode material.

Patent CN 105261740 A discloses a method for preparing a surface coating of a lithium nickel manganate positive electrode material. The main idea of this method is weighing a phosphate salt and a lithium salt, adding a complexing agent to obtain a lithium phosphate sol, and mixing the sol with lithium nickel manganate and drying, and then performing mixed sintering. This improves the cycle stability and rate performance of the spinel-type lithium nickel manganate. However, regarding the sol-gel method, the cost is high, sample recovery is difficult, the coating layer is too thick, and it is difficult to repeat the experiment, and thus the method is not suitable for mass production.

Patent CN10602525 B proposes coating lithium titanium phosphate (LiTi(PO₄)₃) onto the surface of a positive electrode material through a two-step wet chemical method, followed by performing heat treatment to form a fast-ion-conductor-type solid electrolyte layer so as to improve the rate performance of the material. This method has cumbersome processes and is costly, and n-butyl titanate used in the processes has low toxicity. These are not conducive to large-scale commercial production.

Patent CN104766960 B proposes adding lithium nickel manganate into water, then adding a surfactant to the suspension, then adding sodium meta-aluminate solution, stirring and introducing carbon dioxide to the mixed solution to adjust the pH value, and then performing heat treatment in a muffle furnace to obtain an alumina-coated lithium nickel manganate positive electrode material. A gas is used in this method to adjust pH, and thus it is difficult to control experimental processes. Therefore, this is not conducive to large-scale production.

To sum up, in order to achieve the purpose of coating substances being uniform and coating rate being high, wet methods such as sol-gel method are mostly adopted for coating in the prior art. The process is cumbersome, drying is needed to remove water, and the energy consumption cost is high. Therefore, this is not conducive to commercial application.

Therefore, how to prepare a lithium nickel manganate positive electrode material with excellent performance and simple process is a technical problem that needs to be solved urgently.

### SUMMARY

The main purpose of the present application is to provide a lithium nickel manganate positive electrode material and its preparation method and use. Firstly, based on a current sintering process, a single-crystal dispersant is added to prepare a high-voltage nickel manganese material having high dispersity of single crystals; secondly, the lithium nickel manganate positive electrode material is uniformly coated to avoid the contact between the positive electrode material and an electrolyte, thereby inhibiting the decomposition of the electrolyte, a lithium ion battery prepared by the lithium nickel manganate positive electrode material has good electrochemical performance.

In order to achieve the above purpose, the present application provides the following technical solutions.

A first aspect of the present application provides a lithium nickel manganate positive electrode material, having a molecular formula of Li_{α}Ni_{β}Mn_{2-β}M_{γ}O_{4-δ}/N, where 0.95≤α≤1.1, 0.4≤β≤0.6, 0.0005≤γ≤0.02, 0≤δ≤0.2, M is a single-crystal dispersing element, and M is at least one of V, Nb, Ta, Mo or W; N represents a coating layer, and the coating layer includes a P compound and/or an Al compound; a coating amount of N is 500-10000ppm.

For the above-mentioned lithium nickel manganate positive electrode material, as a preferred embodiment, when the coating layer is the P compound and the Al compound, a mass ratio of Al to P is (0.2-3):1.

For the above-mentioned lithium nickel manganate positive electrode material, as a preferred embodiment, a coating rate S1/(S1+S2) of P and/or Al is 20%-80%; where S1 is a peak area corresponding to a content m₁ of P and/or Al, and S2 is a peak area corresponding to a content m₂ of Ni and Mn elements.

For the above-mentioned lithium nickel manganate positive electrode material, as a preferred embodiment, when the coating layer is the P compound, the lithium nickel manganate positive electrode material has a BET of 0.4-0.7m²/g. When the coating layer is the Al compound, the lithium nickel manganate positive electrode material has a BET of 0.6-0.9m²/g. When the coating layer is the P compound and the Al compound, the lithium nickel manganate positive electrode material has a BET of 0.6-0.9m²/g.

The lithium nickel manganate positive electrode material provided by the present application is in a spinel-type crystal structure and belongs to Fd3m or P4₃32 space point groups. Single crystal has a relative large grain size, has a D50 of 4-10µm, and has a morphology of octahedron or truncated octahedron, and the cross section thereof is dense with no hollows or faults. Residual lithium on its surface is low, (carbonate radical + hydroxide radical) ≤500ppm. The material has a good thermal stability and a high thermal decomposition temperature, with a DSC decomposition temperature of 275-295°C. The powder compaction density of the material is 2.8-3.2g/cm³ at 3.5T.

A second aspect of the present application provides a preparation method of a lithium nickel manganate positive electrode material, including the following steps:
S1. mixing a precursor, a lithium source and a single-crystal dispersant and evenly stirring them to obtain a mixture;
S2. performing a first sintering on the mixture in an atmospheric environment to obtain a high single-crystal dispersion material;
S3. mixing the high single-crystal dispersion material and a coating agent, and evenly stirring them to obtain a secondary mixture; where the coating agent is a P source (phosphorus source) and/or an Al source (aluminium source);
S4. performing a second sintering on the secondary mixture in the atmospheric environment to obtain the coated lithium nickel manganate positive electrode material.

For the above preparation method of the lithium nickel manganate positive electrode material, as a preferred embodiment, when the coating agent contains the Al source, the Al source has a particle size of 30-60nm.

For the above preparation method of the lithium nickel manganate positive electrode material, as a preferred embodiment, the Al source includes at least one of Al₂O₃, AlPO₄, or Al(OH)₃.

It should be noted that when the coating agent is the Al source, it may be obtained directly, since the industrialization of nanometer-sized coating agents of this type of compounds is relatively mature. At an appropriate temperature, an Al-containing substance does not melt, but due to that the coating agent is nanometer-sized (30-60nm), it may also be more uniformly attached to the surface of the positive electrode material, and the coating rate is higher after the sintering reaction. The coating amount of Al in the lithium nickel manganate is 500-10000ppm, and the coating rate of Al is 20%-80%. The BET of this material will significantly increase due to the influence of the nanometer-sized coating agent, and the BET is 0.6-0.9m²/g after coating.

For the above preparation method of the lithium nickel manganate positive electrode material, as a preferred embodiment, when the coating agent contains the P source, the P source has a particle size of 3-5µm.

For the above preparation method of the lithium nickel manganate positive electrode material, as a preferred embodiment, the P source includes at least one of Li₃PO₄, AlPO₄, LiFePO₄, FePO₄, NH₄H₂PO₄ or (NH₄)₂HPO₄.

It should be noted that when the coating agent is the P source, after being subjected to refinement treatment, it is refined from 2-3mm to 3-5µm, since this type of compound has a lower melting point. At an appropriate temperature, a P-containing substance melts and more uniformly attached to the surface of the positive electrode material, and thus the coating rate is higher after the sintering reaction. The coating rate of P may reach up to 80%, where the coating rate of P is tested through XPS, and XPS may be used to test the content and state of the surface of the positive electrode material. Since peak areas (S) correspond to different elements on the surface of the positive electrode material is directly proportional to the element content (m), the content m1 of P corresponds to the peak area S1, and the content m2 of Ni and Mn elements corresponds to the peak area S2, and the coating rate of P is S1/(S1+S2). The coating amount of P in the lithium nickel manganate is 500-10000ppm, where the coating amount of P is tested and the proportion of the content of P element in the positive electrode material is tested by ICP. The BET of the positive electrode material will slightly increase due to the influence of the coating agent. The BET is 0.4-0.7m²/g after coating.

For the above preparation method of the lithium nickel manganate positive electrode material, as a preferred embodiment, the precursor has a molecular formula of Ni_{β}Mn_{2-β}(OH)₄, where 0.4≤β≤0.6; the precursor has at least one of the following properties that the precursor has a D50 of 2-8µm; the precursor has a specific surface area of 10-30m²/g; and the precursor has a tap density of 0.8-1.5g/cm³.

Further preferably, the D50 of the precursor is 3-5µm, the specific surface area of the precursor is 15-25m²/g, and the tap density of the precursor is 1.0-1.3g/cm³.

For the above preparation method of the lithium nickel manganate positive electrode material, as a preferred embodiment, the lithium source is at least one of lithium carbonate, lithium hydroxide, lithium oxalate, lithium nitrate, lithium chloride, lithium fluoride or lithium acetate. The single-crystal dispersant includes at least one of V₂O₅, NH₄VO₃, Nb₂O₅, LiNbO₃, Ta₂O₅, LiTaO₃, H₂MoO₄, (NH₄)₂MoO₄, H₂WO₄ or WO₃.

For the above preparation method of the lithium nickel manganate positive electrode material, as a preferred embodiment, a molar ratio of the precursor to the lithium source is 1:(0.5-1.1); and an added amount of the single-crystal dispersant is 0.1%-1% of a mass of the precursor.

For the above preparation method of the lithium nickel manganate positive electrode material, as a preferred embodiment, in S1 and S3, the speed for mixing and stirring is 600-1000rpm, and the stirring time under this condition is 15-60min.

For the above preparation method of the lithium nickel manganate positive electrode material, as a preferred embodiment, the mixture in S1 and the secondary mixture in S3 are placed in an atmosphere box type furnace for sintering, and an oxygen concentration of the atmosphere in the atmosphere box type furnace is 15%-40%.

For the above preparation method of the lithium nickel manganate positive electrode material, as a preferred embodiment, the first sintering is: heating from room temperature up to 800-1000°C at a rate of 1-5°C/min, calcining for 6-15h, and then cooling down to 600-800°C at a rate of 0. 1-2°C/min, keeping the temperature for 1-10h, and finally, naturally cooling down to the room temperature.

For the above preparation method of the lithium nickel manganate positive electrode material, as a preferred embodiment, the high single-crystal dispersion material has a BET of 0.3-0.5m²/g.

For the above preparation method of the lithium nickel manganate positive electrode material, as a preferred embodiment, the second sintering is: heating from room temperature up to 300-600°C at a heating rate of 1-5°C/min, calcining for 6-15h, and then naturally cooling down to the room temperature.

A third aspect of the present application provides a lithium battery having the above-mentioned lithium nickel manganate positive electrode material; or having the above-mentioned lithium nickel manganate positive electrode material prepared by the above method.

A fourth aspect of the present application provides an electrical device having the above-mentioned lithium battery.

A fifth aspect of the present application provides an electric vehicle having the above-mentioned lithium battery.

The beneficial effects of the present application are as follows.

The present application provides a lithium nickel manganate positive electrode material, having a single-crystal dispersing element and a coating layer of P compound and/or Al compound. Due to that the material has smaller BET, extremely low residual lithium on its surface, and the coating of P and/or Al, there are fewer side reactions at the material interface and cycle performance is better. Due to the appropriate particle size control on the material, the material has both a good capacity rate performance and cycling performance. Due to the material has a higher DSC decomposition temperature, the material has excellent thermal stability.

The present application provides a preparation method of a lithium nickel manganate positive electrode material. Firstly, by means of adding a small amount of a single-crystal dispersing element (V, Nb, Ta, Mo or W), a high-voltage nickel manganese material having good dispersity of single crystals is prepared, therefore, this material has smaller specific surface area.

Since the single-crystal dispersant containing a single-crystal dispersing element (containing a compound of V/Nb/Ta/Mo/W) has better solubility for the lithium source and precursor, the lithium source and precursor, after being melted at high temperature, have a low viscosity under the action of the single-crystal dispersant. Therefore, the lithium source and precursor have a fast mass transfer rate, have higher mobility ratio than that in a solid phase, and are diffused together after a short time to react, and thus they have smaller interface energy and thermal stress so as to be easily saturated to form a single crystal material having a specific special crystal plane orientation. Hence, the addition of a single-crystal dispersing element can make the lithium nickel manganate positive electrode material has better dispersity of single crystals and smaller specific surface area.

Furthermore, by means of uniformly coating the lithium nickel manganate positive electrode material having high dispersity of single crystals, the positive electrode material is prevented from directly contacting the electrolyte to cause oxidative decomposition. Therefore, the positive electrode material can be isolated from HF or can be prevented from reacting with HF. This inhibits HF to corrode the positive electrode and improves the stability of the material, and thus improves the cycle performance of battery. Under an appropriate temperature, the P source melts, and uniformly coats onto the surface of the material after liquefaction of the P source. Finally, a lithium nickel manganate material having high coating rate is obtained to achieve the purpose of uniform coating. At the same time, after heat treatment of the P source, phosphates formed have thermodynamic stability, and good stability to HF and high voltage. Moreover, the formed phosphates (lithium phosphate, manganese phosphate, nickel phosphate) have higher ionic conductivity, and all batteries prepared have smaller impedance growth and better cycle performance. After the Al source is calcined, an inert layer or a fast ion conductor such as LiAlO₂ may be formed, which can isolate HF or the reaction with HF. This inhibits HF to corrode the positive electrode, improves the stability of the material, and promotes the transmission of Li⁺, thereby improving the capacity and cycle performance of battery.

Further, the present application adopts dry coating, which is convenient, fast, cost-effective and suitable for industrial production.

Further, in the present application an Al source that is in nanometer size or a P source that has been subjected to refining treatment is adopted. By means of coating by a nanometer-sized Al source, the size of coating particles and the size of the positive electrode material are quite different, and the coating agent may be uniformly coated on the surface of the high-voltage nickel manganese material. Since nanometer-sized P source is difficult to obtain directly, the P source used in the present application has been refined, and additionally the P source is easy to be melted, a good effect of uniform coating can also be obtained. By means of the coating method which results in a uniform and dense coating and a high coating rate, the positive electrode material is prevented from directly contacting the electrolyte to cause oxidative decomposition, thereby effectively reducing the gas generation of battery and greatly improving the cycle performance of battery. The coating rate of conventional dry coating methods is <50%. The maximum coating rate after nanometer-sized or refined Al and/or P is used for coating may be increased to 70%-80%.

### BRIEF DESCRIPTION OF DRAWINGS

FIG. 1 is an SEM image of a sample after a first sintering in Example 1.
FIG. 2 is an SEM image of a sample after a first sintering in Example 2.
FIG. 3 is an SEM image of a sample after a first sintering in Example 3.
FIG. 4 is an SEM image of a sample after a first sintering in Example 4.
FIG. 5 is an SEM image of a sample after a first sintering in Example 5.
FIG. 6 is an SEM image of a sample after being coated with P in Example 5.
FIG. 7 is an EDS Mapping of P in a P-coated sample in Example 5.
FIG. 8 is an SEM image of a sample after being coated with Al in Example 10.
FIG. 9 is an EDS Mapping of Al in an Al-coated sample in Example 10.
FIG. 10 is an SEM image of a sample after a first sintering in Comparative example 2.
FIG. 11 is an SEM image of a sample after being co-coated with P and Al in Example 15.
FIG. 12 is an EDS Mapping of Al in a P-Al co-coated sample in Example 15.
FIG. 13 is an EDS Mapping of P in a P-Al co-coated sample in Example 15.

### DESCRIPTION OF EMBODIMENTS

In order to make the person skilled in the art to better understand the technical solutions of the present application, the technical solutions in the embodiments of the present application will be clearly and completely described below in combination with the examples of the present application. Apparently, the described embodiments are a part rather than all embodiments of the present application. Based on the embodiments in the present application, all other embodiments obtained by the person skilled in the art without creative work shall fall within the protection scope of the present application.

A lithium nickel manganate material is described in the present application, having a molecular formula: Li_{α}Ni_{β}Mn_{2-β}M_{γ}O_{4-δ}/N, where 0.95≤α≤1.1, 0.4≤β≤0.6, 0.0005≤γ≤0.02, 0≤δ≤0.2; M is a single-crystal dispersing element, and M is at least one of V, Nb, Ta, Mo or W; N represents a coating layer, and the coating layer includes a P compound and/or an Al compound; the coating amount of N is 500-10000ppm.

Further, when the coating layer is the P compound and the Al compound, a mass ratio of Al to P is (0.2-3):1, and may be selected from 0.2:1, 0.33:1, 0.5:1, 1:1, 2:1 or 3:1.

Further, when a coating rate S1/(S1+S2) of the coating layer is 20%-80%, where S1 is a peak area corresponding to a content m₁ of P and/or Al, and S2 is a peak area corresponding to a content m₂ of Ni and Mn elements, the covering rate may be selected from 20%, 30%, 40%, 50%, 60%, 70% or 80%.

Further, when the coating layer is the P compound, the lithium nickel manganate positive electrode material has a BET of 0.4-0.7m²/g.

Further, when the coating layer is the Al compound, the lithium nickel manganate positive electrode material has a BET of 0.6-0.9m²/g.

Further, when the coating layer is the P compound and Al compound, the lithium nickel manganate positive electrode material has a BET of 0.6-0.9m²/g.

Further, residual lithium on a surface of the lithium nickel manganate positive electrode material is ≤500ppm.

Further, a DSC decomposition temperature of the lithium nickel manganate positive electrode material is 275-295°C.

Further, a powder compaction density of the lithium nickel manganate positive electrode material is 2.8-3.2g/cm³ at 3.5T.

Further, D50 of the lithium nickel manganate positive electrode material is 4-10µm.

The present application further provides a preparation method for the above-mentioned lithium nickel manganate positive electrode material to explain the preparation process of the above-mentioned lithium nickel manganate positive electrode material, however the preparation of the above-mentioned lithium nickel manganate positive electrode material is not limited to this method. The preparation method used as an example includes but is not limited to the following steps.

S1: a precursor, a lithium source, and a single-crystal dispersant are mixed and stirred evenly.

Where, the molecular formula of the precursor is: Ni_{β}Mn_{2-β}(OH)₄, with 0.4≤β≤0.6; the precursor has at least one of the following properties that the D50 of the precursor is 2-8µm; the specific surface area of the precursor is 10-30m²/g; and the tap density of the precursor is 0.8-1.5g/cm³.

Optionally, the β may be 0.4, 0.5 or 0.6.

Optionally, D50 of the precursor is 2µm, 4µm, 7µm or 8µm.

Optionally, the specific surface area of the precursor is 10m²/g, 18m²/g, 24m²/g or 30m²/g.

Optionally, the tap density of the precursor is 0.8g/cm³, 1g/cm³, 1.2g/cm³, 1.3g/cm³ or 1.5g/cm³.

Optionally, the lithium source is at least one of lithium carbonate, lithium hydroxide, lithium oxalate, lithium nitrate, lithium chloride, lithium fluoride or lithium acetate.

Optionally, the single-crystal dispersant includes at least one of V₂O₅, NH₄VO₃, Nb₂O₅, LiNbO₃, Ta₂O₅, LiTaO₃, H₂MoO₄, (NH₄)₂MoO₄, H₂WO₄ or WO₃.

Where, a molar ratio of the precursor to the lithium source is 1:0.5-1.1, and the added amount of the single-crystal dispersant is 0.1%-1% of the mass of the precursor.

Optionally, when the lithium source is lithium carbonate, the molar ratio of the precursor to lithium carbonate is 1:0.5, 1:0.51, 1:0.52, 1:0.54 or 1:0.55; when the lithium source is lithium hydroxide, lithium oxalate, lithium nitrate, lithium chloride, lithium fluoride or lithium acetate, the molar ratio of the precursor to the lithium source is 1:1, 1:1.02, 1:1.04, 1:1.08 or 1:1.1; and the added amount of the single-crystal dispersant is 0.1%, 0.3%, 0.5%, 0.8% or 1.0% of the mass of the precursor.

S2: the mixture is subjected to a first sintering in an atmospheric environment to obtain a high single-crystal dispersion material.

Where, an oxygen concentration of the atmospheric environment is 15%-40%.

Optionally, the oxygen concentration of the atmospheric environment is 15%, 18%, 20%, 25%, 30%, 35% or 40%.

Where, the first sintering is: heating from room temperature up to 800-1000°C at a rate of 1-5°C/min, calcining for 6-15h, and then cooling down to 600-800°C at a rate of 0.1-2°C/min, keeping the temperature for 1-10h, and finally, naturally cooling down to room temperature.

Optionally, the following are performed: heating up to 800°C at a rate of 2°C/min, calcining for 6 hours, then cooling down to 600°C at a rate of 0.1°C/min, keeping the temperature for 1h, and finally, naturally cooling down to room temperature.

Alternatively, optionally, the following are performed: heating up to 900°C at a rate of 3°C/min, calcining for 10 hours, then cooling down to 700°C at a rate of 0.5°C/min, keeping the temperature for 5h, and finally, naturally cooling down to room temperature.

Alternatively, optionally, the following are performed: heating up to 1000°C at a rate of 5°C/min, calcining for 15 hours, then cooling down to 800°C at a rate of 2°C/min, keeping the temperature for 10h, and finally, naturally cooling down to room temperature.

Where, the BET of the high single-crystal dispersion material is 0.3-0.5m²/g.

S3: the high single-crystal dispersion material and a coating agent are mixed and evenly stirred to obtain a secondary mixture.

Optionally, when the coating agent contains an Al source, the particle size of the Al source is 30-60nm. The Al source includes at least one of Al₂O₃, AlPO₄, or Al(OH)₃.

Optionally, when the coating agent contains a P source, the particle size of the P source is 3-5µm. The P source includes at least one of Li₃PO₄, AlPO₄, LiFePO₄, FePO₄, NH₄H₂PO₄ or (NH₄)₂HPO₄.

S4: the secondary mixture is subjected to a second sintering in the atmospheric environment to obtain the lithium nickel manganate positive electrode material as described in any one of claims 1 to 5.

Where, the coating agent is a P source and/or an Al source.

Where, the second sintering is: heating from room temperature up to 300-600°C at a heating rate of 1-5°C/min, calcining for 6-15h, and then naturally cooling down to room temperature.

Optionally, the following are performed: heating from room temperature up to 300°C at a heating rate of 1°C/min, calcining for 6h, and then naturally cooling down to room temperature.

Alternatively, optionally, the following are performed: heating from room temperature up to 400°C at a heating rate of 2°C/min, calcining for 8h, and then naturally cooling down to room temperature.

Alternatively, optionally, the following are performed: heating from room temperature up to 500°C at a heating rate of 4°C/min, calcining for 10h, and then naturally cooling down to room temperature.

Alternatively, optionally, the following are performed: heating from room temperature up to 600°C at a heating rate of 5°C/min, calcining for 15h, and then naturally cooling down to room temperature.

The lithium nickel manganate positive electrode material of the present application may be applied to a lithium-ion battery. The lithium-ion battery may be used in an electrical device, and the electrical device may specifically be a 3C electronic product, a power tool, etc. The lithium-ion battery may also be used in an electric vehicle. The lithium-ion battery may also be used in the field of energy storage.

### Example 1

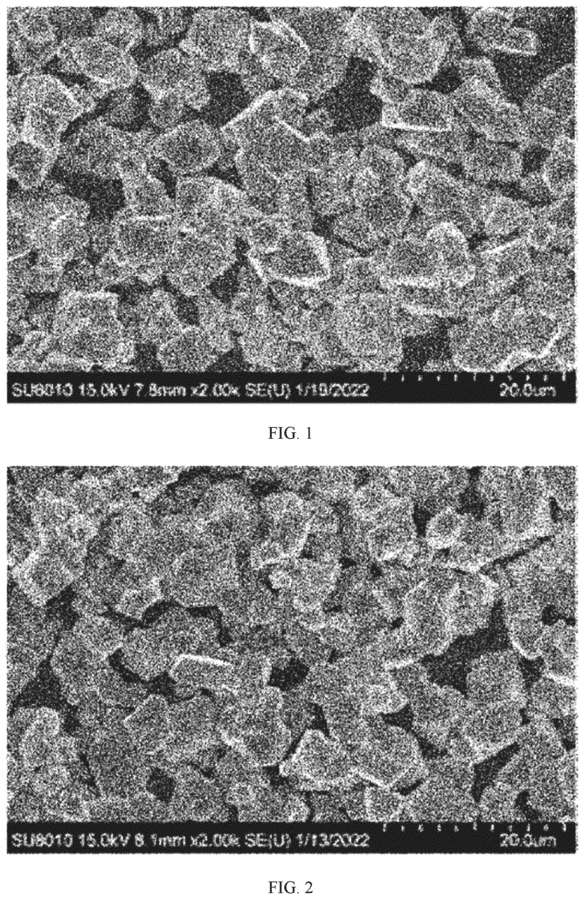

(1) 1000g of a precursor Ni_{0.5}Mn_{1.5}(OH)₄, 205.6g of lithium carbonate, and 3g of a single-crystal dispersant V₂O₅ were added into a high-speed mixer, and mixed and stirred evenly, with a stirring speed of 800rpm and a stirring time of 20min, and after being mixed evenly, the mixture was placed in an atmosphere box type furnace for a first sintering. During the first sintering, the temperature was raised to 900°C at a rate of 3°C/min and kept for 8h, then it was cooled to 650°C at a rate of 0.5°C/min and kept at 650°C for 10h, then was naturally cooled down to room temperature.
(2) The product after the first sintering was crushed and sieved to obtain a high-voltage nickel manganese material having high dispersity of single crystals, the chemical formula of which was LiNi_{0.5}Mn_{1.5}V_{0.0059}O₄; the BET of the sample after the first sintering was 0.37m²/ g, and an SEM scanning image was shown in FIG. 1. It can be seen that when V₂O₅ was used as a single-crystal dispersant, the effect of single crystal dispersion was good.
(3) 1000g of the lithium nickel manganate positive electrode material having high dispersity of single crystals dispersion and a coating agent NH₄H₂PO₄ were mixed and stirred evenly, with a stirring speed of 800rpm and a stirring time of 20min, and after being mixed, the mixture was placed in the atmosphere box type furnace for a second sintering. During the second sintering, the temperature was raised to 450°C at a rate of 4°C/min and kept for 10h, and then was naturally cooled down to room temperature.
(4) The product after the second sintering was crushed and sieved to obtain a coated lithium nickel manganate positive electrode material LiNi_{0.5}Mn_{1.5}V_{0.0059}O₄/P. The BET of the coated sample was 0.47m²/g. The coated lithium nickel manganate positive electrode material was subjected to an ICP test, and the coating amount of P was 1500ppm.

Full cell preparation: the positive electrode active material, conductive carbon Super P, KS6 and polyvinylidene fluoride (HSV900) were mixed according to a mass ratio of 94.5%: 2%: 1%: 2.5% to form an uniform slurry, and then the slurry was uniformly coated on an aluminum foil and dried, with a surface density controlled at 16mg/cm² on a single side. Then the latter was rolled by using a roller machine to obtain a positive electrode sheet having a compaction density of 3.0g/cm³, and then the positive electrode sheet was put into a vacuum drying box and dried at 120°C for 10h. The positive electrode sheet, a separator, and a negative electrode sheet were wound into a battery cell. The battery cell was designed to have a nominal capacity of 600mAh, a NP ratio of 1.12, an injected liquid of 3g, the separator was a PP/PE composite separator, the negative electrode was graphite, and the electrolyte was a high-voltage electrolyte (Xinzhoubang LBC502A50). The full cell was placed for 1 day for formation, with a voltage range of 3.4-4.85V. It was charged with 0.05C constant current for 1h, with 0.1C constant current for 1h, and with 0.2C constant current for 1h to 4.85V. It was charged at a constant voltage of 4.85V until the current is less than 0.05C, discharged at 0.33C to 3.4V, so as to obtain an initial capacity for 0.33C. After the full cell was aged for 3 days, then was subjected to capacity sorting, followed by cycle and gas generation tests. The cycle test was 500 times of charging and discharging with 1C under 25°C, and the gas generation test was made in a situation that the full cell was fully charged and then stored for 7 days under 45°C.

An initial capacity for 0.33C was tested to be 129.5mAh/g, a capacity retention rate after 500 cycles was tested to be 67.5%, and a gas generated was tested to be 5.6mL/Ah.

### Example 2

The difference between Example 2 and Example 1 was that the single-crystal dispersant used in Example 2 was Nb₂O₅. The BET of the sample after the first sintering was 0.36m²/g; as can be seen from the SEM scanning image shown in FIG. 2, the effect of single crystal dispersion was good when Nb₂O₅ was used as a single-crystal dispersant. The coated lithium nickel manganate positive electrode material LiNi_{0.5}Mn_{1.5}Nb_{0.0041}O₄/P was obtained, with the BET of the coated sample being 0.45m²/g. The coated lithium nickel manganate positive electrode material was subjected to an ICP test, and the coating amount of P was 1500ppm.

The full cell preparation was the same as that of Example 1. The initial capacity for 0.33C was tested to be 131.2mAh/g, the capacity retention rate after 500 cycles was tested to be 72.9%, and a gas generated was 5.8mL/Ah.

### Example 3

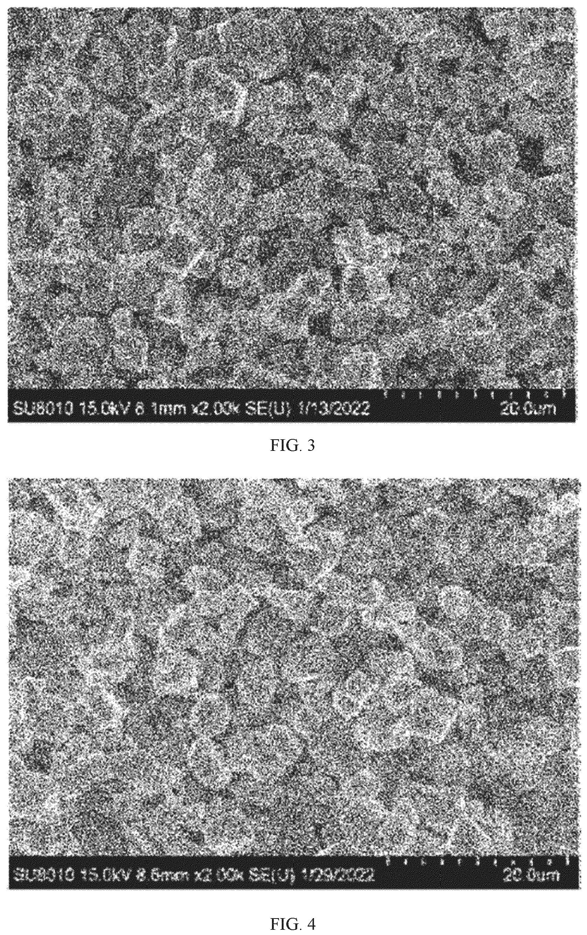

The difference between Example 3 and Example 1 was that the single-crystal dispersant used in Example 3 was Ta₂O₅. The BET of the sample after the first sintering was 0.47m²/g; as can be seen from the SEM scanning image shown in FIG. 3, the effect of single crystal dispersion was good when Ta₂O₅ was used as a single-crystal dispersant. The coated lithium nickel manganate positive electrode material LiNi_{0.5}Mn_{1.5}Ta_{0.0024}O₄/P was obtained, with the BET of the coated sample being 0.56m²/g. The coated lithium nickel manganate positive electrode material was subjected to an ICP test, and the coating amount of P was 1500ppm.

The full cell preparation was the same as that of Example 1. The initial capacity for 0.33C was tested to be 132.1mAh/g, the capacity retention rate after 500 cycles was tested to be 78.5%, and a gas generated was 4.8mL/Ah.

### Example 4

The difference between Example 4 and Example 1 was that the single-crystal dispersant used in Example 4 was H₂MoO₄. The BET of the sample after the first sintering was 0.48m²/g; as can be seen from the SEM scanning image shown in FIG. 4, the effect of single crystal dispersion was good when H₂MoO₄ was used as a single-crystal dispersant. The coated lithium nickel manganate positive electrode material LiNi_{0.5}Mn_{1.5}Mo_{0.0033}O₄/P was obtained, with the BET of the coated sample being 0.59m²/g. The coated lithium nickel manganate positive electrode material was subjected to an ICP test, and the coating amount of P was 1500ppm.

The full cell preparation was the same as that of Example 1. The initial capacity for 0.33C was tested to be 128.6mAh/g, the capacity retention rate after 500 cycles was tested to be 68.2%, and a gas generated was 6.7mL/Ah.

### Example 5

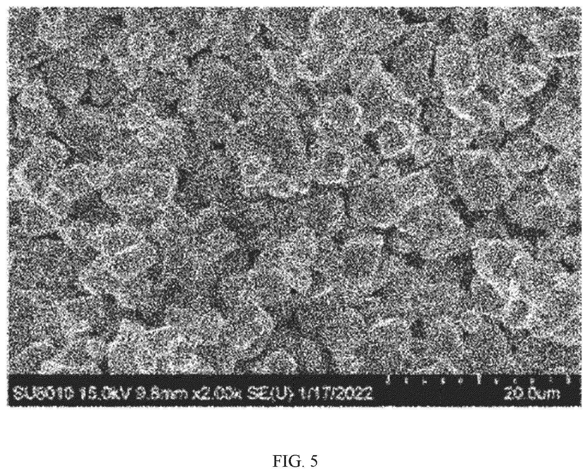

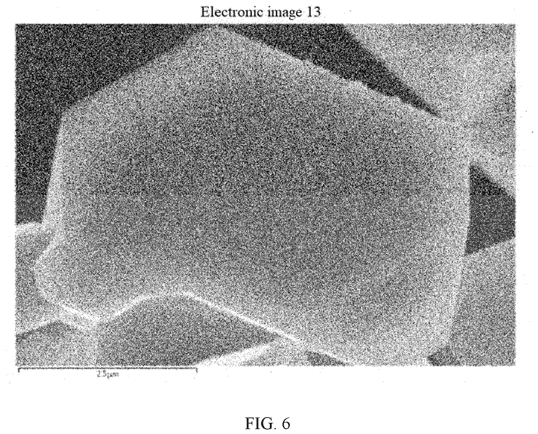

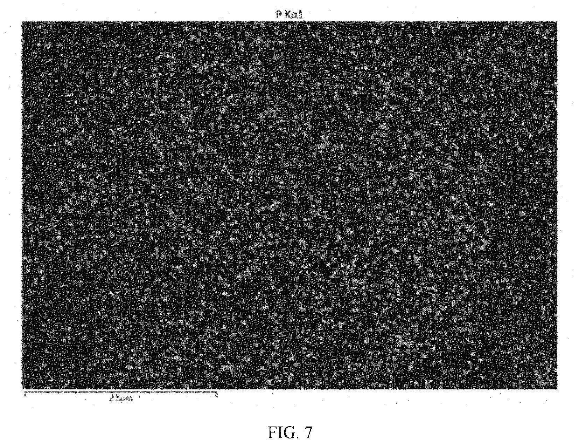

The difference between Example 5 and Example 1 was that the single-crystal dispersant used in Example 5 was WO₃. The BET of the sample after the first sintering was 0.35m²/g; as can be seen from the SEM scanning image shown in FIG. 5, the effect of single crystal dispersion was good when WO₃ was used as a single-crystal dispersant. The coated lithium nickel manganate positive electrode material LiNi_{0.5}Mn_{1.5}W_{0.0023}O₄/P was obtained, with the BET of the coated sample being 0.49m²/g, the residual lithium on the surface being 105ppm, the DSC decomposition temperature being 291°C, and the powder compaction density at 3.5T being 3.10g/cm³. The SEM scanning image and the EDS Mapping of P were shown in FIG. 6 and FIG. 7, it can be seen that the P coating was uniform without agglomeration. The coated lithium nickel manganate positive electrode material was subjected to an ICP test, and the coating amount of P was 1500ppm.

The full cell preparation was the same as that of Example 1. The initial capacity for 0.33C was tested to be 129.9mAh/g, the capacity retention rate after 500 cycles was tested to be 70.5%, and a gas generated was 6.1mL/Ah.

### Example 6

(1) 1000g of a precursor Ni_{0.5}Mn_{1.5}(OH)₄, 205.6g of lithium carbonate, and 3g of a single-crystal dispersant V₂O₅ were added into a high-speed mixer, and mixed and stirred evenly, with a stirring speed of 800rpm and a stirring time of 20min, and after being mixed evenly, the mixture was placed in an atmosphere box type furnace for a first sintering. During the first sintering, the temperature was raised to 900°C at a rate of 3°C/min and kept for 8h, then it was cooled to 650°C at a rate of 0.5°C/min and kept at 650°C for 10h, then was naturally cooled down to room temperature.
(2) The product after the first sintering was crushed and sieved to obtain a high-voltage nickel manganese material having high single-crystal dispersion, and the chemical formula of which was LiNi_{0.5}Mn_{1.5}V_{0.0059}O₄; the BET of the sample after the first sintering was 0.37m²/ g, and an SEM scanning image was shown in FIG. 1.
(3) 1000g of the lithium nickel manganate positive electrode material having high single-crystal dispersion and a coating agent Al₂O₃ were mixed and stirred evenly, with a stirring speed of 800rpm and a stirring time of 20min, and after being mixed, the mixture was placed in an atmosphere box type furnace for a second sintering. During the second sintering, the temperature was raised to 450°C at a rate of 4°C/min and kept for 10h, and then was naturally cooled down to room temperature.
(4) the product after the second sintering was crushed and sieved to obtain a coated lithium nickel manganate positive electrode material LiNi_{0.5}Mn_{1.5}V_{0.0059}O₄/Al. The BET of the coated sample was 0.75m²/g. The coated lithium nickel manganate positive electrode material was subjected to an ICP test, and the coating amount of Al was 1500ppm.

The full cell preparation was the same as that of Example 1. The initial capacity for 0.33C was tested to be 128.4mAh/g, the capacity retention rate after 500 cycles was tested to be 65.5 %, and a gas generated was 5.9mL/Ah.

### Example 7

The difference between Example 7 and Example 6 was that the single-crystal dispersant used in Example 7 was Nb₂O₅. The BET of the sample after the first sintering was 0.36m²/g; the SEM scanning image was shown in FIG. 2. The coated lithium nickel manganate positive electrode material LiNi_{0.5}Mn_{1.5}Nb_{0.0041}O₄/Al was obtained, with the BET of the coated sample being 0.78m²/g. The coated lithium nickel manganate positive electrode material was subjected to an ICP test, and the coating amount of Al was 1500ppm.

The full cell preparation was the same as that of Example 1. The initial capacity for 0.33C was tested to be 130.2mAh/g, the capacity retention rate after 500 cycles was tested to be 69.8%, and a gas generated was 5.7mL/Ah.

### Example 8

The difference between Example 8 and Example 6 was that the single-crystal dispersant used in Example 8 was Ta₂O₅. The BET of the sample after the first sintering was 0.47m²/g; the SEM scanning image was shown in FIG. 3. The coated lithium nickel manganate positive electrode material LiNi_{0.5}Mn_{1.5}Ta_{0.0024}O₄/Al was obtained, with the BET of the coated sample being 0.86m²/g. The coated lithium nickel manganate positive electrode material was subjected to an ICP test, and the coating amount of Al was 1500ppm.

The full cell preparation was the same as that of Example 1. The initial capacity for 0.33C was tested to be 131.5mAh/g, the capacity retention rate after 500 cycles was tested to be 74.2%, and a gas generated was 5mL/Ah.

### Example 9

The difference between Example 9 and Example 6 was that the single-crystal dispersant used in Example 9 was H₂MoO₄. The BET of the sample after the first sintering was 0.48m²/g; the SEM scanning image was shown in FIG. 4. The coated lithium nickel manganate positive electrode material LiNi_{0.5}Mn_{1.5}Mo_{0.0033}O₄/Al was obtained, with the BET of the coated sample being 0.82m²/g. The coated lithium nickel manganate positive electrode material was subjected to an ICP test, and the coating amount of Al was 1500ppm.

The full cell preparation was the same as that of Example 1. The initial capacity for 0.33C was tested to be 129.3mAh/g, the capacity retention rate after 500 cycles was tested to be 70.5%, and a gas generated was 5.8mL/Ah.

### Example 10

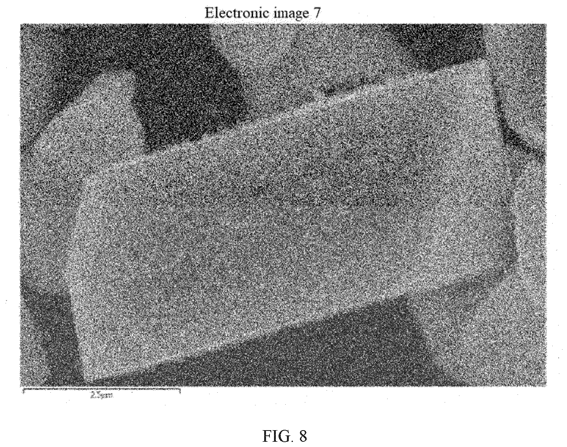

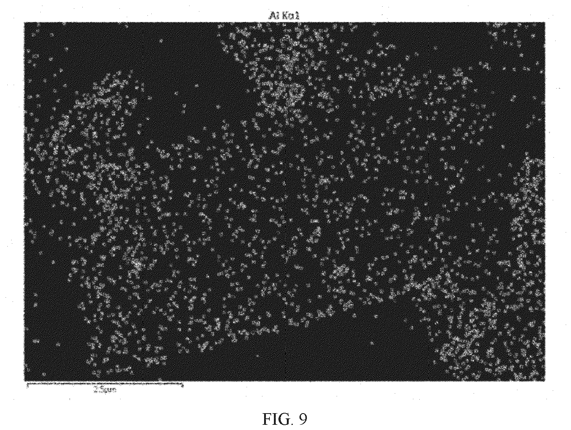

The difference between Example 10 and Example 6 was that the single-crystal dispersant used in Example 10 was WO₃. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/Al was obtained, with the BET of the coated sample being 0.81m²/g, the residual lithium on the surface being 237ppm, the DSC decomposition temperature being 287°C, and the powder compaction density at 3.5T being 3.04g/cm³. The SEM scanning image and the EDS Mapping of Al were shown in FIG. 8 and FIG. 9 respectively, it can be seen that the Al coating was uniform without agglomeration. The coated lithium nickel manganate positive electrode material was subjected to an ICP test, and the coating amount of Al was 1500ppm.

The full cell preparation was the same as that of Example 1. The initial capacity for 0.33C was tested to be 129.5mAh/g, the capacity retention rate after 500 cycles was tested to be 68.4 %, and a gas generated was 5.2mL/Ah.

### Comparative example 1

(1) 1000g of a precursor Ni_{0.5}Mn_{1.5}(OH)₄, 205.6g of lithium carbonate and 3g of single-crystal dispersant WO₃ were added into a high-speed mixer, and mixed and stirred evenly, with a stirring speed of 800rpm and a stirring time of 20min, and after being mixed evenly, the mixture was placed in an atmosphere box type furnace for a first sintering. During the first sintering, the temperature was raised to 900°C at a rate of 3°C/min and kept for 8h, then it was cooled to 650°C at a rate of 0.5°C/min and kept at 650°C for 10h, then was naturally cooled down to room temperature.
(2) The product after the first sintering was crushed and sieved to obtain a high-voltage nickel manganese material having high single-crystal dispersion, and the chemical formula of which was LiNi_{0.5}Mn_{1.5}W_{0.0023}O₄.

The full cell preparation was the same as that of Example 1. The initial capacity at 0.33C was tested to be 129.2mAh/g, the capacity retention rate after 500 cycles was tested to be 39.6%, and a gas generated was 9.4mL/Ah.

### Comparative example 2:

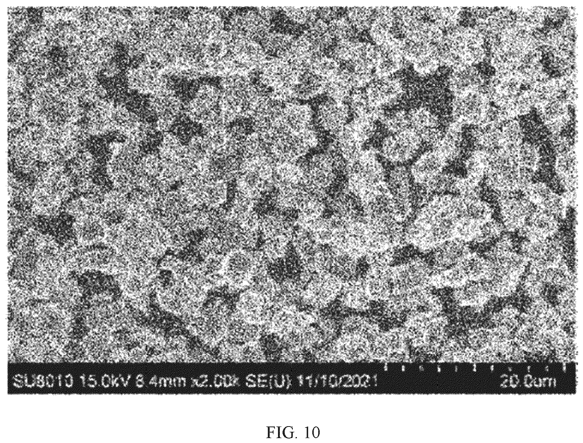

The difference between Comparative example 2 and Example 1 was that in Comparative example 2, no single-crystal dispersant and coating agent were used, and the second sintering was not conducted. The lithium nickel manganate positive electrode material LiNi_{0.5}Mn_{1.5}O₄ was obtained, the BET of the sample after the first sintering was 0.67m²/g, and as can be seen from the SEM scanning image shown in FIG. 10, the effect of single crystal dispersion was not good with partial agglomeration.

The full cell preparation was the same as that of Example 1. The initial capacity for 0.33C was tested to be 130.9mAh/g, the capacity retention rate after 500 cycles was tested to be 35.4%, and a gas generated was 12.1mL/Ah.

### Comparative example 3:

The difference between Comparative example 3 and Example 5 was that the coating agent used in Comparative example 3 was ZnO, with an amount of 1500ppm. The coated lithium nickel manganate positive electrode material LiNi_{0.5}Mn_{1.5}W_{0.0023}O₄/Zn was obtained. The coated lithium nickel manganate positive electrode material was subjected to an ICP test, and the coating amount of Zn was 1500ppm.

The full cell preparation was the same as that of Example 1. The initial capacity for 0.33C was tested to be 129.4mAh/g, the capacity retention rate after 500 cycles was tested to be 45.1%, and a gas generated was 9.2mL/Ah.

### Comparative example 4:

The difference between Comparative example 4 and Example 5 was that the coating agent used in Comparative example 4 was Cr₂O₃. The coated lithium nickel manganate positive electrode material LiNi_{0.5}Mn_{1.5}W_{0.0023}O₄/Cr. The coated lithium nickel manganate positive electrode material was subjected to an ICP test, and the coating amount of Cr was 1500ppm.

The full cell preparation was the same as that of Example 1. The initial capacity for 0.33C was tested to be 129.8mAh/g, the capacity retention rate after 500 cycles was tested to be 49.8%, and a gas generated was 8.7mL/Ah.

### Example 11:

(1) 1000g of a precursor Ni_{0.5}Mn_{1.5}(OH)₄, 205.6g of lithium carbonate, and 3g of single-crystal dispersant V₂O₅ were added into a high-speed mixer, and mixed and stirred evenly, with a stirring speed of 800rpm and a stirring time of 20min, and after being mixed evenly, the mixture was placed in an atmosphere box type furnace for a first sintering. During the first sintering, the temperature was raised to 900°C at a rate of 3°C/min and kept for 8h, then it was cooled to 650°C at a rate of 0.5°C/min and kept at 650°C for 10h, then was naturally cooled down to room temperature.
(2) The product after the first sintering was crushed and sieved to obtain a high-voltage nickel manganese material having high single-crystal dispersion, and the chemical formula of which was LiNi_{0.5}Mn_{1.5}V_{0.0059}O₄; the BET of the sample after the first sintering was 0.37m²/ g, and an SEM scanning image is shown in FIG. 1.
(3) 1000g of lithium nickel manganate positive electrode material having high single-crystal dispersion and a coating agent NH₄H₂PO₄ and Al₂O₃ were mixed and stirred evenly, with a stirring speed of 800rpm and a stirring time of 20min, and after being mixed, the mixture was placed in an atmosphere box type furnace for a second sintering. During the second sintering, the temperature was raised to 450°C at a rate of 4°C/min and kept for 10h, and then was naturally cooled down to room temperature.
(4) The product after the second sintering was crushed and sieved to obtain a coated lithium nickel manganate positive electrode material LiNi_{0.5}Mn_{1.5}V_{0.0059}O₄/ P-Al. The BET of the coated sample was 0.66m²/g. The coated lithium nickel manganate positive electrode material was subjected to an ICP test, and the coating amounts of P and Al were 750ppm and 750ppm respectively.

The full cell preparation was the same as that of Example 1. The initial capacity for 0.33C was tested to be 130.1mAh/g, the capacity retention rate after 500 cycles was tested to be 66.4%, and a gas generated was 5.7mL/Ah.

### Example 12

The difference between Example 12 and Example 11 was that the single-crystal dispersant used in Example 12 was Nb₂O₅. The BET of the sample after the first sintering was 0.36m²/g; the SEM scanning image was shown in FIG. 2. The coated lithium nickel manganate positive electrode material LiNi_{0.5}Mn_{1.5}Nb_{0.0041}O₄/P-Al was obtained, with the BET of the coated sample being 0.69m²/g. The coated lithium nickel manganate positive electrode material was subjected to an ICP test, and the coating amounts of P and Al were 750ppm and 750ppm respectively.

The full cell preparation was the same as that of Example 1. The initial capacity for 0.33C was tested to be 130.5mAh/g, the capacity retention rate after 500 cycles was tested to be 70.1%, and a gas generated was 5.8mL/Ah.

### Example 13

The difference between Example 13 and Example 11 was that the single-crystal dispersant used in Example 12 was Ta₂O₅. The BET of the sample after the first sintering was 0.47m²/g; the SEM scanning image was shown in FIG. 3. The coated lithium nickel manganate positive electrode material LiNi_{0.5}Mn_{1.5}Ta_{0.0024}O₄/P-Al was obtained, with the BET of the coated sample being 0.71m²/g. The coated lithium nickel manganate positive electrode material was subjected to an ICP test, and the coating amounts of P and Al were 750ppm and 750ppm respectively.

The full cell preparation was the same as that of Example 1. The initial capacity for 0.33C was tested to be 131.2mAh/g, the capacity retention rate after 500 cycles was tested to be 72.3%, and a gas generated was 5.4mL/Ah.

### Example 14

The difference between Example 14 and Example 11 was that the single-crystal dispersant used in Example 14 was H₂MoO₄. The BET of the sample after the first sintering was 0.48m²/g; the SEM scanning image was shown in FIG. 4. The coated lithium nickel manganate positive electrode material LiNi_{0.5}Mn_{1.5}Mo_{0.0033}O₄/Al was obtained, with the BET of the coated sample being 0.74m²/g. The coated lithium nickel manganate positive electrode material was subjected to an ICP test, and the coating amounts of P and Al were 750ppm and 750ppm respectively.

The full cell preparation was the same as that of Example 1. The initial capacity for 0.33C was tested to be 130.4mAh/g, the capacity retention rate after 500 cycles was tested to be 65.9%, and a gas generated was 6.2mL/Ah.

### Example 15

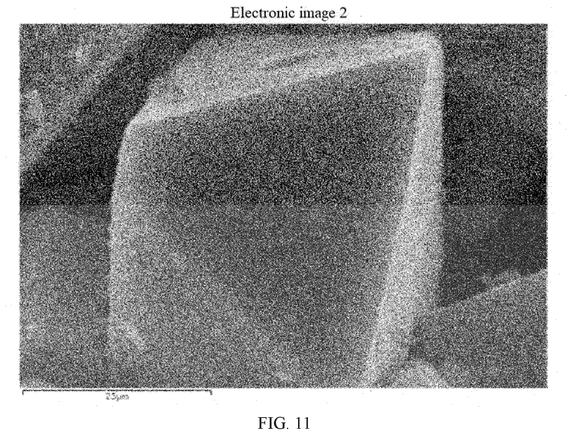

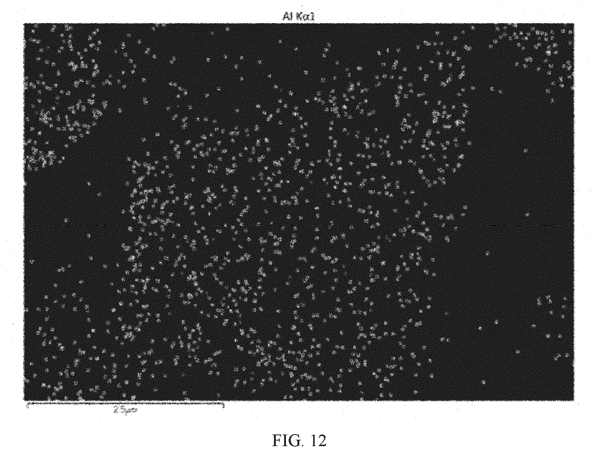

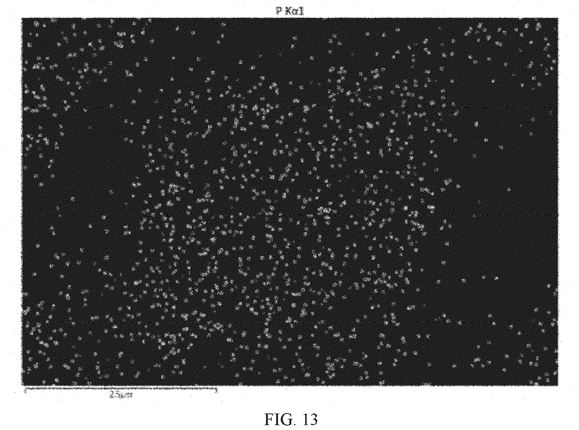

The difference between Example 15 and Example 11 was that the single-crystal dispersant used in Example 11 was WO₃. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P-Al was obtained, with the BET of the coated sample being 0.64m²/g, the residual lithium on the surface being 246ppm, the DSC decomposition temperature being 288°C, and the powder compaction density at 3.5T being 3.03g/cm³. The SEM scanning image and the EDS Mapping of P and Al were shown in FIG. 11, FIG. 12 and FIG. 13 respectively, it can be seen that the P-Al co-coating is uniform without agglomeration. The coated lithium nickel manganate positive electrode material was subjected to an ICP test, and the coating amounts of P and Al were 750ppm and 750ppm respectively.

The full cell preparation was the same as that of Example 1. The initial capacity for 0.33C was tested to be 131.1mAh/g, the capacity retention rate after 500 cycles was tested to be 66.4%, and a gas generated was 6.4mL/Ah.

**Table 1: Electrochemical properties for Examples 1 to 15 and Comparative examples 1 to 4**

| Serial number | Single crystal dispersant | BET after the first sintering (m²/g) | Coating agent | Coating amount (ppm) | Capacity for 0.33C (mAh/g) | Capacity retention rate after 500 cycles (%) | Gas generation (mL/Ah) |
|---|---|---|---|---|---|---|---|
| Example 1 | V₂O₅ | 0.37 | NH₄H₂PO₄ | 1500 | 129.5 | 67.5 | 5.6 |
| Example 2 | Nb₂O₅ | 0.36 | NH₄H₂PO₄ | 1500 | 131.2 | 72.9 | 5.8 |
| Example 3 | Ta₂O₅ | 0.47 | NH₄H₂PO₄ | 1500 | 132.1 | 78.5 | 4.8 |
| Example 4 | H₂MoO₄ | 0.48 | NH₄H₂PO₄ | 1500 | 128.6 | 68.2 | 6.7 |
| Example 5 | WO₃ | 0.35 | NH₄H₂PO₄ | 1500 | 129.9 | 70.5 | 6.1 |
| Example 6 | V₂O₅ | 0.37 | Al₂O₃ | 1500 | 128.4 | 65.5 | 5.9 |
| Example 7 | Nb₂O₅ | 0.36 | Al₂O₃ | 1500 | 130.2 | 69.8 | 5.7 |
| Example 8 | Ta₂O₅ | 0.47 | Al₂O₃ | 1500 | 131.5 | 74.2 | 5 |
| Example 9 | H₂MoO₄ | 0.48 | Al₂O₃ | 1500 | 129.3 | 70.5 | 5.8 |
| Example 10 | WO₃ | 0.35 | Al₂O₃ | 1500 | 129.5 | 68.4 | 5.2 |
| Comparative example 1 | WO₃ | 0.35 | Un-coated | / | 129.2 | 39.6 | 9.4 |
| Comparative example 2 | Un-added | 0.67 | / | / | 130.9 | 35.4 | 12.1 |
| Comparative example 3 | WO₃ | 0.35 | ZnO | 1500 | 129.4 | 45.1 | 9.2 |
| Comparative example 4 | WO₃ | 0.35 | Cr₂O₃ | 1500 | 129.8 | 49.8 | 8.7 |
| Example 11 | V₂O₅ | 0.37 | NH₄H₂PO₄ and Al₂O₃ | 500 +750 | 130.1 | 66.4 | 5.7 |
| Example 12 | Nb₂O₅ | 0.36 | NH₄H₂PO₄ and Al₂O₃ | 500 +750 | 130.5 | 70.1 | 5.8 |
| Example 13 | Ta₂O₅ | 0.47 | NH₄H₂PO₄ and Al₂O₃ | 500 +750 | 131.2 | 72.3 | 5.4 |
| Example 14 | H₂MoO₄ | 0.48 | NH₄H₂PO₄ and Al₂O₃ | 500 +750 | 130.4 | 65.9 | 6.2 |
| Example 15 | WO₃ | 0.35 | NH₄H₂PO₄ and Al₂O₃ | 500 +750 | 131.1 | 66.4 | 6.4 |

It can be seen from Table 1 that in Examples 1-15, the BET after the first sintering was between 0.3-0.5m²/g, the single crystal dispersion was good, and the electrochemical performance was good after the coating of P compound and/or Al compound.

In Comparative example 1, even if the single-crystal dispersing element was added to obtain the positive electrode material having good single crystal dispersion, its electrochemical performance was not as good as that of the coated positive electrode materials in Examples 1 to 15, and its performance in terms of cycling and gas generation was significantly worse, since it was not subjected to coating.

In Comparative example 2, no single-crystal dispersing element was added and no coating was performed, resulting in poor single crystal dispersion and poor electrochemical performance of the prepared positive electrode material.

In Comparative example 3 and Comparative example 4, although the single-crystal dispersing element was added, and the obtained positive electrode material had good single crystal dispersion, the electrochemical performance was not good since other coating agents ZnO and Cr₂O₃ were used.

### Example 16

The difference between Example 16 and Example 5 was that the coating agent used in Example 16 was (NH₄)₂HPO₄. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 1500ppm.

The full cell preparation was the same as that of Example 1. The initial capacity for 0.33C was tested to be 130.2mAh/g, the capacity retention rate after 500 cycles was tested to be 68.7%, and a gas generated was 5.9mL/Ah.

### Example 17

The difference between Example 17 and Example 5 was that the coating agent used in Example 17 was Li₃PO₄. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 1500ppm.

The full cell preparation was the same as that of Example 1. The initial capacity for 0.33C was tested to be 130.8mAh/g, the capacity retention rate after 500 cycles was tested to be 72.4%, and a gas generated was 5.6mL/Ah.

### Example 18

The difference between Example 18 and Example 5 was that the coating agent used in Example 18 was FePO₄. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 1500ppm.

The full cell preparation was the same as that of Example 1. The initial capacity for 0.33C was tested to be 131.5mAh/g, the capacity retention rate after 500 cycles was tested to be 73.5%, and a gas generated was 5.7mL/Ah.

### Example 19

The difference between Example 19 and Example 5 was that the coating agent used in Example 19 was LiFePO₄. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 1500ppm.

The full cell preparation was the same as that of Example 1. The initial capacity for 0.33C was tested to be 130.7mAh/g, the capacity retention rate after 500 cycles was tested to be 69.3%, and a gas generated was 6.1mL/Ah.

### Example 20

The difference between Example 20 and Example 10 was that the coating agent used in Example 20 was Al(OH)₃. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/Al was obtained. The coated lithium nickel manganate positive electrode material was subjected to an ICP test, and the coating amount of Al was 1500ppm.

The full cell preparation was the same as that of Example 1. The initial capacity for 0.33C was tested to be 129.5mAh/g, the capacity retention rate after 500 cycles was tested to be 67.4%, and a gas generated was 6.5mL/Ah.

### Example 21

The difference between Example 21 and Example 10 was that the coating agent used in Example 21 was LiAlO₂. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/Al was obtained. The coated lithium nickel manganate positive electrode material was subjected to an ICP test, and the coating amount of Al was 1500ppm.

The full cell preparation was the same as that of Example 1. The initial capacity for 0.33C was tested to be 130.3mAh/g, the capacity retention rate after 500 cycles was tested to be 71.6%, and a gas generated was 5.4mL/Ah.

### Example 22

The difference between Example 22 and Example 15 was that the coating agent used in Example 22 was AlPO₄. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 760ppm and 660ppm respectively.

The full cell preparation was the same as that of Example 1. The initial capacity for 0.33C was tested to be 131.2mAh/g, the capacity retention rate after 500 cycles was tested to be 72.6%, and a gas generated was 5.2mL/Ah.

### Example 23

The difference between Example 23 and Example 15 was that the coating agents used in Example 23 were (NH₄)₂HPO₄ and Al₂O₃. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 750ppm and 750ppm respectively.

The full cell preparation was the same as that of Example 1. The initial capacity for 0.33C was tested to be 129.8mAh/g, the capacity retention rate after 500 cycles was tested to be 70.5%, and a gas generated was 6.1mL/Ah.

### Example 24

The difference between Example 24 and Example 15 was that the coating agents used in Example 24 were FePO₄ and Al₂O₃. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P-Al was obtained. The coated lithium nickel manganate positive electrode material was subjected to an ICP test, and the coating amounts of P and Al were 750ppm and 750ppm respectively.

The full cell preparation was the same as that of Example 1. The initial capacity for 0.33C was tested to be 130.1mAh/g, the capacity retention rate after 500 cycles was tested to be 72.4%, and a gas generated was 6mL/Ah.

### Example 25

The difference between Example 25 and Example 15 was that the coating agents used in Example 25 were (NH₄)₂HPO₄ and Al(OH)₃. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 750ppm and 750ppm respectively.

The full cell preparation was the same as that of Example 1. The initial capacity for 0.33C was tested to be 130.4mAh/g, the capacity retention rate after 500 cycles was tested to be 69.8%, and a gas generated was 6.2mL/Ah.

**Table 2: Electrochemical performance for Examples 16 to 25**

| Serial number | Single crystal dispersant | BET after the first sintering (m²/g) | Coating agent | Coating amount (ppm) | Capacity for 0.33C (mAh/g) | Capacity retention rate after 500 cycles (%) | Gas generation (mL/Ah) |
|---|---|---|---|---|---|---|---|
| Example 16 | WO₃ | 0.35 | (NH₄)₂HPO₄ | 1500 | 130.2 | 68.7 | 5.9 |
| Example 17 | WO₃ | 0.35 | Li₃PO₄ | 1500 | 130.8 | 72.4 | 5.6 |
| Example 18 | WO₃ | 0.35 | FePO₄ | 1500 | 131.5 | 73.5 | 5.7 |
| Example 19 | WO₃ | 0.35 | LiFePO₄ | 1500 | 130.7 | 69.3 | 6.1 |
| Example 20 | WO₃ | 0.35 | Al(OH)₃ | 1500 | 129.5 | 67.4 | 6.5 |
| Example 21 | WO₃ | 0.35 | LiAlO₂ | 1500 | 130.3 | 71.6 | 5.4 |
| Example 22 | WO₃ | 0.35 | AlPO₄ | P~760; | 131.2 | 72.6 | 5.2 |
| | | | | Al~660 | | | |
| Example 23 | WO₃ | 0.35 | (NH₄)₂HPO₄ and Al₂O₃ | P~750; | 129.8 | 70.5 | 6.1 |
| | | | | Al~750 | | | |
| Example 24 | WO₃ | 0.35 | FePO₄ and Al₂O₃ | P~750; | 130.1 | 72.4 | 6 |
| | | | | Al~750 | | | |
| Example 25 | WO₃ | 0.35 | (NH₄)₂HPO₄ and Al(OH)₃ | P~750; | 130.4 | 69.8 | 6.2 |
| | | | | Al~750 | | | |

It can be seen from Table 2 that in Examples 16-25, after the single-crystal dispersant WO₃ was addedd and the first sintering was performed, the BET was 0.35m²/g, and the single crystal dispersion was good; after P or/and Al coating, the electrochemical performance was good, and the full cell' s cycle performance and gas generation were more excellent.

Although different P and Al sources resultes in different electrochemical performance effects, they are overall significantly better than the situation of no coating or coating with other substances. In terms of comprehensive cost and performance, preferred P sources mainly are (NH₄)₂HPO₄, NH₄H₂PO₄ and FePO₄, Al sources mainly are Al₂O₃ and Al(OH)₃, and AlPO₄ is mainly used for co-coating.

### Comparative example 5

The difference between Comparative example 5 and Example 5 was that the coating amount of P in Comparative example 5 was 200ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 200ppm, and the coating rate of P was 12%.

The full cell preparation was the same as that of Example 1. The initial capacity for 0.33C was tested to be 130.1mAh/g, the capacity retention rate after 500 cycles was tested to be 59.7%, and a gas generated was 7.5mL/Ah.

### Example 26

The difference between Example 26 and Example 5 was that the coating amount of P in Example 26 was 500ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 500ppm, and the coating rate of P was 35%.

The full cell preparation was the same as that of Example 1. The initial capacity for 0.33C was tested to be 132.5mAh/g, the capacity retention rate after 500 cycles was tested to be 69.3%, and a gas generated was 6.5mL/Ah.

### Example 27

The difference between Example 27 and Example 5 was that the coating amount of P in Example 27 was 1000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 1000ppm, and the coating rate of P was 57%.

The full cell preparation was the same as that of Example 1. The initial capacity for 0.33C was tested to be 131.4mAh/g, the capacity retention rate after 500 cycles was tested to be 72.5%, and a gas generated was 5.2mL/Ah.

### Example 28

The difference between Example 28 and Example 5 was that the coating amount of P in Example 28 was 2000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 2000ppm, and the coating rate of P was 62%.

The full cell preparation was the same as that of Example 1. The initial capacity for 0.33C was tested to be 132.2mAh/g, the capacity retention rate after 500 cycles was tested to be 70.3%, and a gas generated was 6.7mL/Ah.

### Example 29

The difference between Example 29 and Example 5 was that the coating amount of P in Example 29 was 3000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 3000ppm, and the coating rate of P was 69%.

The full cell preparation was the same as that of Example 1. The initial capacity for 0.33C was tested to be 132.0mAh/g, the capacity retention rate after 500 cycles was tested to be 71.9%, and a gas generated was 6.2mL/Ah.

### Example 30

The difference between Example 30 and Example 5 was that the coating amount of P in Example 30 was 4000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 4000ppm, and the coating rate of P was 73%.

The full cell preparation was the same as that of Example 1. The initial capacity for 0.33C was tested to be 133.1mAh/g, the capacity retention rate after 500 cycles was tested to be 72.5%, and a gas generated was 5.1mL/Ah.

### Example 31

The difference between Example 31 and Example 5 was that the coating amount of P in Example 31 was 5000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 5000ppm, and the coating rate of P was 75%.

The full cell preparation was the same as that of Example 1. The initial capacity for 0.33C was tested to be 133mAh/g, the capacity retention rate after 500 cycles was tested to be 69.4%, and a gas generated was 5.5mL/Ah.

### Example 32

The difference between Example 32 and Example 5 was that the coating amount of P in Example 32 was 8000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 8000ppm, and the coating rate of P was 79%.

The full cell preparation was the same as that of Example 1. The initial capacity for 0.33C was tested to be 131.1mAh/g, the capacity retention rate after 500 cycles was tested to be 69.9%, and a gas generated was 6.5mL/Ah.

### Example 33

The difference between Example 33 and Example 5 was that the coating amount of P in Example 33 was 10000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 10000ppm, and the coating rate of P was 80%.

The full cell preparation was the same as that of Example 1. The initial capacity for 0.33C was tested to be 133.6mAh/g, the capacity retention rate after 500 cycles was tested to be 65.8%, and a gas generated was 7.1mL/Ah.

### Comparative example 6

The difference between Comparative example 6 and Example 5 was that the coating amount of P in Comparative example 6 was 20000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P was obtained. The coated lithium nickel manganate positive electrode material was subjected to an ICP test, and the coating amount of P was 20000ppm, and the coating rate of P was 82%.

The full cell preparation was the same as that of Example 1. The initial capacity for 0.33C was tested to be 131.9mAh/g, the capacity retention rate after 500 cycles was tested to be 54.7%, and a gas generated was 7.8mL/Ah.

**Table 3: Electrochemical performance for Examples 26 to 33 and Comparative examples 5 and 6**

| Serial number | Single crystal dispers -ant | BET after the first sintering (m²/g) | Coating agent | Coating amount (ppm) | Capacity for 0.33C (mAh/g) | Capacity retention rate after 500 cycles (%) | Gas generat -ion (mL/A h) | Coating rate (%) |
|---|---|---|---|---|---|---|---|---|
| Compara -tive example 5 | WO₃ | 0.35 | NH₄H₂PO₄ | 200 | 130.1 | 59.7 | 7.5 | 12% |
| Example 26 | WO₃ | 0.35 | NH₄H₂PO₄ | 500 | 132.5 | 69.3 | 6.5 | 35% |
| Example 27 | WO₃ | 0.35 | NH₄H₂PO₄ | 1000 | 131.4 | 72.5 | 5.2 | 57% |
| Example 28 | WO₃ | 0.35 | NH₄H₂PO₄ | 2000 | 132.2 | 70.3 | 6.7 | 62% |
| Example 29 | WO₃ | 0.35 | NH₄H₂PO₄ | 3000 | 132 | 71.9 | 6.2 | 69% |
| Example 30 | WO₃ | 0.35 | NH₄H₂PO₄ | 4000 | 133.1 | 72.5 | 5.1 | 73% |
| Example 31 | WO₃ | 0.35 | NH₄H₂PO₄ | 5000 | 133 | 69.4 | 5.5 | 75% |
| Example 32 | WO₃ | 0.35 | NH₄H₂PO₄ | 8000 | 131.1 | 69.9 | 6.5 | 79% |
| Example 33 | WO₃ | 0.35 | NH₄H₂PO₄ | 10000 | 133.6 | 65.8 | 7.1 | 80% |
| Compara -tive example 6 | WO₃ | 0.35 | NH₄H₂PO₄ | 20000 | 131.9 | 54.7 | 7.8 | 82% |

It can be seen from Table 3 that the electrochemical performance was better in Examples 26 to 33 when the coating amount was 500-10000ppm. In Comparative example 5, the coating amount was less, resulting in poor coating effect, and the electrochemical performance was significantly worse. In Comparative example 6, the coating amount was too much, resulting in too large interface resistance, and the electrochemical performance was poor.

In general, with the coating amount of P increasing, the coating rate gradually increases, reaching a maximum of about 80%. The preferred coating amount is 1000-4000ppm, and the coated lithium nickel manganate positive electrode material has good electrochemical performance.

### Comparative example 7

The difference between Comparative example 7 and Example 10 was that the coating amount of Al in Comparative example 7 was 200ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/Al was obtained. The coated lithium nickel manganate positive electrode material was subjected to an ICP test, and the coating amount of Al was 200ppm, and the coating rate of Al was 15%.

The full cell preparation was the same as that of Example 1. The initial capacity for 0.33C was tested to be 130.2mAh/g, the capacity retention rate after 500 cycles was tested to be 56.7%, and a gas generated was 7.8mL/Ah.

### Example 34

The difference between Example 34 and Example 10 was that the coating amount of Al in Example 34 was 500ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/Al was obtained. The coated lithium nickel manganate positive electrode material was subjected to an ICP test, and the coating amount of Al was 500ppm, and the coating rate of Al was 33%.

The full cell preparation was the same as that of Example 1. The initial capacity for 0.33C was tested to be 130.4mAh/g, the capacity retention rate after 500 cycles was tested to be 62.4%, and a gas generated was 7.1mL/Ah.

### Example 35

The difference between Example 35 and Example 10 was that the coating amount of Al in Example 35 was 1000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/Al was obtained. The coated lithium nickel manganate positive electrode material was subjected to an ICP test, and the coating amount of Al was 1000ppm, and the coating rate of Al was 56%.

The full cell preparation was the same as that of Example 1. The initial capacity for 0.33C was tested to be 129.8mAh/g, the capacity retention rate after 500 cycles was tested to be 67.4%, and a gas generated was 6.7mL/Ah.

### Example 36

The difference between Example 36 and Example 10 was that the coating amount of Al in Example 36 was 2000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/Al was obtained. The coated lithium nickel manganate positive electrode material was subjected to an ICP test, and the coating amount of Al was 2000ppm, and the coating rate of Al was 65%.

The full cell preparation was the same as that of Example 1. The initial capacity for 0.33C was tested to be 129.5mAh/g, the capacity retention rate after 500 cycles was tested to be 69.8%, and a gas generated was 6.3mL/Ah.

### Example 37

The difference between Example 37 and Example 10 was that the coating amount of Al in Example 37 was 3000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/Al was obtained. The coated lithium nickel manganate positive electrode material was subjected to an ICP test, and the coating amount of Al was 3000ppm, and the coating rate of Al was 71%.

The full cell preparation was the same as that of Example 1. The initial capacity for 0.33C was tested to be 129.9mAh/g, the capacity retention rate after 500 cycles was tested to be 68.5%, and a gas generated was 6.6mL/Ah.

### Example 38

The difference between Example 38 and Example 10 was that the coating amount of Al in Example 38 was 4000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/Al was obtained. The coated lithium nickel manganate positive electrode material was subjected to an ICP test, and the coating amount of Al was 4000ppm, and the coating rate of Al was 73%.

The full cell preparation was the same as that of Example 1. The initial capacity for 0.33C was tested to be 128.4mAh/g, the capacity retention rate after 500 cycles was tested to be 69.9%, and a gas generated was 6.7mL/Ah.

### Example 39

The difference between Example 39 and Example 10 was that the coating amount of Al in Example 39 was 5000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/Al was obtained. The coated lithium nickel manganate positive electrode material was subjected to an ICP test, and the coating amount of Al was 5000ppm, and the coating rate of Al was 75%.

The full cell preparation was the same as that of Example 1. The initial capacity for 0.33C was tested to be 128.6mAh/g, the capacity retention rate after 500 cycles was tested to be 64.1%, and a gas generated was 6.9mL/Ah.

### Example 40

The difference between Example 40 and Example 10 was that the coating amount of Al in Example 40 was 8000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/Al was obtained. The coated lithium nickel manganate positive electrode material was subjected to an ICP test, and the coating amount of Al was 8000ppm, and the coating rate of Al was 79%.

The full cell preparation was the same as that of Example 1. The initial capacity for 0.33C was tested to be 128.7mAh/g, the capacity retention rate after 500 cycles was tested to be 62.7%, and a gas generated was 7.2mL/Ah.

### Example 41

The difference between Example 41 and Example 10 was that the coating amount of Al in Example 41 was 10000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/Al was obtained. The coated lithium nickel manganate positive electrode material was subjected to an ICP test, and the coating amount of Al was 10000ppm, and the coating rate of Al was 80%.

The full cell preparation was the same as that of Example 1. The initial capacity for 0.33C was tested to be 128.1mAh/g, the capacity retention rate after 500 cycles was tested to be 60.8%, and a gas generated was 7.9mL/Ah.

### Comparative example 8

The difference between Comparative example 8 and Example 10 was that the coating amount of Al in Comparative example 8 was 20000ppm. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/Al was obtained. The coated lithium nickel manganate positive electrode material was subjected to an ICP test, and the coating amount of Al was 20000ppm, and the coating rate of Al was 86%.

The full cell preparation was the same as that of Example 1. The initial capacity for 0.33C was tested to be 127.4mAh/g, the capacity retention rate after 500 cycles was tested to be 39.7%, and a gas generated was 8.9mL/Ah.

**Table 4: Electrochemical performance for Examples 34 to 41 and Comparative examples 7 and 8**

| Serial number | Single crystal dispersant | BET after the first sintering (m²/g) | Coating agent | Coating amount (ppm) | Capacity for 0.33C (mAh/g) | Capacity retention rate after 500 cycles (%) | Gas generation (mL/Ah) | Coating rate (%) |
|---|---|---|---|---|---|---|---|---|
| Comparative example 7 | WO₃ | 0.35 | Al₂O₃ | 200 | 130.2 | 56.7 | 7.8 | 15% |
| Example 34 | WO₃ | 0.35 | Al₂O₃ | 500 | 130.4 | 62.4 | 7.1 | 33% |
| Example 35 | WO₃ | 0.35 | Al₂O₃ | 1000 | 129.8 | 67.4 | 6.7 | 56% |
| Example 36 | WO₃ | 0.35 | Al₂O₃ | 2000 | 129.5 | 69.8 | 6.3 | 65% |
| Example 37 | WO₃ | 0.35 | Al₂O₃ | 3000 | 129.9 | 68.5 | 6.6 | 71% |
| Example 38 | WO₃ | 0.35 | Al₂O₃ | 4000 | 128.4 | 69.9 | 6.7 | 73% |
| Example 39 | WO₃ | 0.35 | Al₂O₃ | 5000 | 128.6 | 64.1 | 6.9 | 75% |
| Example 40 | WO₃ | 0.35 | Al₂O₃ | 8000 | 128.7 | 62.7 | 7.2 | 79% |
| Example 41 | WO₃ | 0.35 | Al₂O₃ | 10000 | 128.1 | 60.4 | 7.9 | 80% |
| Comparative example 8 | WO₃ | 0.35 | Al₂O₃ | 20000 | 127.4 | 39.7 | 8.9 | 86% |

It can be seen from Table 4 that the electrochemical performance was better in Examples 34 to 41 when the coating amount was 500-10000ppm. In Comparative example 7, the coating amount was less, resulting in poor coating effect, and the electrochemical performance was significantly worse. In Comparative example 8, the coating amount was too much, resulting in too large interface resistance, and the electrochemical performance was poor.

In general, with the coating amount of Al increasing, the coating rate gradually increases, reaching a maximum of about 86%. The preferred coating amount is 1000-4000ppm, and the coated lithium nickel manganate positive electrode material has good electrochemical performance.

### Comparative example 9

The difference between Comparative example 9 and Example 22 was that the coating amounts of P and Al in Comparative example 9 were 100ppm and 80ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P-Al was obtained. The coated lithium nickel manganate positive electrode material was subjected to an ICP test, and the coating amounts of P and Al were 100ppm and 80ppm respectively.

The full cell preparation was the same as that of Example 1. The initial capacity for 0.33C was tested to be 131.5mAh/g, the capacity retention rate after 500 cycles was tested to be 58.4%, and a gas generated was 7.8mL/Ah.

### Example 42

The difference between Example 42 and Example 22 was that the coating amounts of P and Al in Example 42 were 250ppm and 220ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 270ppm and 230ppm respectively.

The full cell preparation was the same as that of Example 1. The initial capacity for 0.33C was tested to be 131.9mAh/g, the capacity retention rate after 500 cycles was tested to be 67.9%, and a gas generated was 7.3mL/Ah.

### Example 43

The difference between Example 43 and Example 22 was that the coating amounts of P and Al in Example 43 were 500ppm and 440ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 500ppm and 440ppm respectively.

The full cell preparation was the same as that of Example 1. The initial capacity for 0.33C was tested to be 132.7mAh/g, the capacity retention rate after 500 cycles was tested to be 71.5%, and a gas generated was 7.1mL/Ah.

### Example 44

The difference between Example 44 and Example 22 was that the coating amounts of P and Al in Example 44 were 1000ppm and 880ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 1000ppm and 880ppm respectively.

The full cell preparation was the same as that of Example 1. The initial capacity for 0.33C was tested to be 132.1mAh/g, the capacity retention rate after 500 cycles was tested to be 75.4%, and a gas generated was 6.5mL/Ah.

### Example 45

The difference between Example 45 and Example 22 was that the coating amounts of P and Al in Example 45 were 1500ppm and 130ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 1500ppm and 130ppm respectively.

The full cell preparation was the same as that of Example 1. The initial capacity for 0.33C was tested to be 131.9mAh/g, the capacity retention rate after 500 cycles was tested to be 72.1%, and a gas generated was 6.7mL/Ah.

### Example 46

The difference between Example 46 and Example 22 was that the coating amounts of P and Al in Example 46 were 2000ppm and 1800ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 2000ppm and 1800ppm respectively.

The full cell preparation was the same as that of Example 1. The initial capacity for 0.33C was tested to be 132.4mAh/g, the capacity retention rate after 500 cycles was tested to be 73.9%, and a gas generated was 6.2mL/Ah.

### Example 47

The difference between Example 47 and Example 22 was that the coating amounts of P and Al in Example 47 were 2500ppm and 2200ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 2500ppm and 2200ppm respectively.

The full cell preparation was the same as that of Example 1. The initial capacity for 0.33C was tested to be 131.7mAh/g, the capacity retention rate after 500 cycles was tested to be 70.1%, and a gas generated was 6.4mL/Ah.

### Example 48

The difference between Example 48 and Example 22 was that the coating amounts of P and Al in Example 48 were 4000ppm and 3500ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 4000ppm and 3500ppm respectively.

The full cell preparation was the same as that of Example 1. The initial capacity for 0.33C was tested to be 130.4mAh/g, the capacity retention rate after 500 cycles was tested to be 64.7%, and a gas generated was 6.9mL/Ah.

### Example 49

The difference between Example 49 and Example 22 was that the coating amounts of P and Al in Example 48 were 5000ppm and 4400ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 5000ppm and 4400ppm respectively.

The full cell preparation was the same as that of Example 1. The initial capacity for 0.33C was tested to be 130.1mAh/g, the capacity retention rate after 500 cycles was tested to be 61.5%, and a gas generated was 7.3mL/Ah.

### Comparative example 10

The difference between Comparative example 10 and Example 22 was that the coating amounts of P and Al in Comparative example 10 were 10000ppm and 8800ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.0023}O₄/P-Al was obtained. The coated lithium nickel manganate positive electrode material was subjected to an ICP test, and the coating amounts of P and Al were 10000ppm and 8800ppm respectively.

The full cell preparation was the same as that of Example 1. The initial capacity for 0.33C was tested to be 129.5mAh/g, the capacity retention rate after 500 cycles was tested to be 45.9%, and a gas generated was 8.1mL/Ah.

**Table 5: Electrochemical performance of Examples 42 to 49 and Comparative examples 9 and 10**

| Serial number | Single crystal dispersant | BET after the first sintering (m²/g) | Coating agent | Coating amount (ppm) | Capacity for 0.33C (mAh/g) | Capacity retention rate after 500 cycles (%) | Gas generation (mL/Ah) |
|---|---|---|---|---|---|---|---|
| Comparative example 9 | WO₃ | 0.35 | AlPO₄ | 100 +90 | 131.5 | 58.4 | 7.8 |
| Example 42 | WO₃ | 0.35 | AlPO₄ | P~270 | 131.9 | 67.9 | 7.3 |
| | | | | Al~230 | | | |
| Example 43 | WO₃ | 0.35 | AlPO₄ | P~500; | 132.7 | 71.5 | 7.1 |
| | | | | Al~440 | | | |
| Example 44 | WO₃ | 0.35 | AlPO₄ | P~1000; | 132.1 | 75.4 | 6.5 |
| | | | | Al~880 | | | |
| Example 45 | WO₃ | 0.35 | AlPO₄ | P~1500 | 131.9 | 72.1 | 6.7 |
| | | | | Al~130 | | | |
| Example 46 | WO₃ | 0.35 | AlPO₄ | P~2000 | 132.4 | 73.9 | 6.2 |
| | | | | Al~1800 | | | |
| Example 47 | WO₃ | 0.35 | AlPO₄ | P~2500 | 131.7 | 70.1 | 6.4 |
| | | | | Al~2200 | | | |
| Example 48 | WO₃ | 0.35 | AlPO₄ | P~4000 | 130.4 | 64.7 | 6.9 |
| | | | | Al~3500 | | | |
| Example 49 | WO₃ | 0.35 | AlPO₄ | P~5000 | 130.1 | 61.5 | 7.3 |
| | | | | Al~4400 | | | |
| Comparative example 10 | WO₃ | 0.35 | AlPO₄ | P~10000 | 129.5 | 45.9 | 8.1 |
| | | | | Al~8800 | | | |

It can be seen from Table 5 that in Examples 42 to 49, the coating amount of P plus Al ranged from 270+230ppm to 5000+4400ppm, and the obtained lithium nickel manganate positive electrode materials had better electrochemical performance. In Comparative example 9, the coating amount is less, resulting in poor coating effect, and the electrochemical performance is significantly worse. In Comparative example 10, the coating amount was too much, resulting in too large interface resistance, and the electrochemical performance was poor.

Preferably, the coating amount of P plus Al ranged from 500+440ppm to 2500+2200ppm.

### Example 50

The difference between Example 50 and Example 23 was that the coating amounts of P and Al in Example 50 were 5000ppm and 1000ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 5000ppm and 1000ppm respectively.

The full cell preparation was the same as that of Example 1. The initial capacity for 0.33C was tested to be 130.7mAh/g, the capacity retention rate after 500 cycles was tested to be 62.8%, and a gas generated was 7.5mL/Ah.

### Example 51

The difference between Example 51 and Example 23 was that the coating amounts of P and Al in Example 50 were 4000ppm and 1000ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 4000ppm and 1000ppm respectively.

The full cell preparation was the same as that of Example 1. The initial capacity for 0.33C was tested to be 130.9mAh/g, the capacity retention rate after 500 cycles was tested to be 68.7%, and a gas generated was 7.1mL/Ah.

### Example 52

The difference between Example 52 and Example 23 was that the coating amounts of P and Al in Example 52 were 3000ppm and 1000ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 5000ppm and 3000ppm respectively.

The full cell preparation was the same as that of Example 1. The initial capacity for 0.33C was tested to be 131.4mAh/g, the capacity retention rate after 500 cycles was tested to be 70.9%, and a gas generated was 6.8mL/Ah.

### Example 53

The difference between Example 53 and Example 23 was that the coating amounts of P and Al in Example 53 were 2000ppm and 1000ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 2000ppm and 1000ppm respectively.

The full cell preparation was the same as that of Example 1. The initial capacity for 0.33C was tested to be 132.9mAh/g, the capacity retention rate after 500 cycles was tested to be 72.6%, and a gas generated was 6.7mL/Ah.

### Example 54

The difference between Example 54 and Example 23 was that the coating amounts of P and Al in Example 54 were 1000ppm and 1000ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 1000ppm and 1000ppm respectively.

The full cell preparation was the same as that of Example 1. The initial capacity for 0.33C was tested to be 132.4mAh/g, the capacity retention rate after 500 cycles was tested to be 71.8%, and a gas generated was 6.9mL/Ah.

### Example 55

The difference between Example 55 and Example 23 was that the coating amounts of P and Al in Example 55 were 500ppm and 1000ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 500ppm and 1000ppm respectively.

The full cell preparation was the same as that of Example 1. The initial capacity for 0.33C was tested to be 131.5mAh/g, the capacity retention rate after 500 cycles was tested to be 70.2%, and a gas generated was 6.8mL/Ah.

### Example 56

The difference between Example 56 and Example 23 was that the coating amounts of P and Al in Example 56 were 1000ppm and 1500ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 1000ppm and 1500ppm respectively.

The full cell preparation was the same as that of Example 1. The initial capacity for 0.33C was tested to be 130.9mAh/g, the capacity retention rate after 500 cycles was tested to be 71.9%, and a gas generated was 6.8mL/Ah.

### Example 57

The difference between Example 57 and Example 23 was that the coating amounts of P and Al in Example 57 were 1000ppm and 2000ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 1000ppm and 2000ppm respectively.

The full cell preparation was the same as that of Example 1. The initial capacity for 0.33C was tested to be 130.1mAh/g, the capacity retention rate after 500 cycles was tested to be 65.1%, and a gas generated was 7.4mL/Ah.

### Example 58

The difference between Example 58 and Example 23 was that the coating amounts of P and Al in Example 58 were 1000ppm and 3000ppm respectively. The BET of the sample after the first sintering was 0.35m²/g; the SEM scanning image was shown in FIG. 5. The coated lithium nickel manganate positive electrode material LiNi_{0.5}Mn_{1.5}W_{0.002}O₄/P-Al was obtained. The coated lithium nickel manganate positive electrode material was subjected to an ICP test, and the coating amounts of P and Al were 1000ppm and 3000ppm respectively.

The full cell preparation was the same as that of Example 1. The initial capacity for 0.33C was tested to be 129.6mAh/g, the capacity retention rate after 500 cycles was tested to be 61.4%, and a gas generated was 7.7mL/Ah.

**Table 6: Electrochemical performance for Examples 50 to 58**

| Serial number | Single crystal dispersant | BET after the first sintering (m²/g) | Coating agent | Coating amount (ppm) | Capacity for 0.33C (mAh/g) | Capacity retention rate after 500 cycles (%) | Gas generation (mL/Ah) |
|---|---|---|---|---|---|---|---|
| Example 50 | WO₃ | 0.35 | (NH₄)₂HPO₄ and Al₂O₃ | P~5000 | 130.7 | 62.8 | 7.5 |
| | | | | Al~1000 | | | |
| Example 51 | WO₃ | 0.35 | (NH₄)₂HPO₄ and Al₂O₃ | P~4000 | 130.9 | 68.7 | 7.1 |
| | | | | Al~1000 | | | |
| Example 52 | WO₃ | 0.35 | (NH₄)₂HPO₄ and Al₂O₃ | P~3000 | 131.4 | 70.9 | 6.8 |
| | | | | Al~1000 | | | |
| Example 53 | WO₃ | 0.35 | (NH₄)₂HPO₄ and Al₂O₃ | P~2000 | 132.9 | 72.6 | 6.7 |
| | | | | Al~1000 | | | |
| Example 54 | WO₃ | 0.35 | (NH₄)₂HPO₄ and Al₂O₃ | P~1000 | 132.4 | 71.8 | 6.9 |
| | | | | Al~1000 | | | |
| Example 55 | WO₃ | 0.35 | (NH₄)₂HPO₄ and Al₂O₃ | P~500 | 131.5 | 70.2 | 6.8 |
| | | | | Al~1000 | | | |
| Example 56 | WO₃ | 0.35 | (NH₄)₂HPO₄ and Al₂O₃ | P~1000 | 130.9 | 71.9 | 6.8 |
| | | | | Al~1500 | | | |
| Example 57 | WO₃ | 0.35 | (NH₄)₂HPO₄ and Al₂O₃ | P~1000 | 130.1 | 65.1 | 7.4 |
| | | | | Al~2000 | | | |
| Example 58 | WO₃ | 0.35 | (NH₄)₂HPO₄ and Al₂O₃ | P~1000 | 129.6 | 61.4 | 7.7 |
| | | | | Al~3000 | | | |

It can be seen from Table 6 that in Examples 50 to 58, the ratio of the coating amounts of Al to P for co-coating was 0.2-3, the electrochemical performance was better. When the coating amount of Al was higher, the material had lower interface resistance and poor cycling. A preferred ratio of the coating amounts of Al to P for co-coating was 0.33-1.5.

The above are only the preferred embodiments of the present application. It should be noted that the person skilled in the art may also make several improvements and supplements without departing from the methods of the present application, and these improvements and supplements should also be regarded whitin the protection scope of the present application.

## Claims

1. A lithium nickel manganate positive electrode material, having a molecular formula of Li_{α}Ni_{β}Mn_{2-β}M_{γ}O_{4-δ}/N, wherein 0.95≤α≤1.1, 0.4≤β≤0.6, 0.0005≤γ≤0.02, 0≤δ≤0.2, M is a single-crystal dispersing element, and M is at least one of V, Nb, Ta, Mo or W;
N represents a coating layer, and the coating layer comprises a P compound and/or an Al compound; a coating amount of N is 500-10000ppm.

2. The lithium nickel manganate positive electrode material according to claim 1, wherein when the coating layer is the P compound and the Al compound, a mass ratio of Al to P is (0.2-3):1.

3. The lithium nickel manganate positive electrode material according to claim 1, wherein a coating rate S1/(S1+S2) of P and/or Al is 20%-80%;
wherein S1 is a peak area corresponding to a content m₁ of P and/or Al, and S2 is a peak area corresponding to a content m₂ of Ni and Mn elements.

4. The lithium nickel manganate positive electrode material according to claim 1, wherein
when the coating layer is the P compound, the lithium nickel manganate positive electrode material has a BET of 0.4-0.7m²/g;
or when the coating layer is the Al compound, the lithium nickel manganate positive electrode material has a BET of 0.6-0.9m²/g;
or when the coating layer is the P compound and the Al compound, the lithium nickel manganate positive electrode material has a BET of 0.6-0.9m²/g.

5. The lithium nickel manganate positive electrode material according to claim 1, wherein the lithium nickel manganate positive electrode material has at least one of the following properties that
residual lithium on a surface of the lithium nickel manganate positive electrode material is ≤500ppm;
a DSC decomposition temperature is 275-295°C;
a powder compaction density at 3.5T is 2.8-3.2g/cm³; and
D50 is 4-10µm.

6. A preparation method of a lithium nickel manganate positive electrode material, comprising the following steps:
S1. mixing a precursor, a lithium source and a single-crystal dispersant and evenly stirring them to obtain a mixture;
S2. performing a first sintering on the mixture in an atmospheric environment to obtain a high single-crystal dispersion material;
S3. mixing the high single-crystal dispersion material and a coating agent, and evenly stirring them to obtain a secondary mixture; wherein the coating agent is a P source and/or an Al source;
S4. performing a second sintering on the secondary mixture in the atmospheric environment to obtain the lithium nickel manganate positive electrode material according to any one of claims 1 to 5.

7. The preparation method of the lithium nickel manganate positive electrode material according to claim 6, wherein when the coating agent contains the Al source, the Al source has a particle size of 30-60nm.

8. The preparation method of the lithium nickel manganate positive electrode material according to claim 7, wherein the Al source comprises at least one of Al₂O₃, AlPO₄, or Al(OH)₃.

9. The preparation method of the lithium nickel manganate positive electrode material according to claim 6, wherein when the coating agent contains the P source, the P source has a particle size of 3-5µm.

10. The preparation method of the lithium nickel manganate positive electrode material according to claim 9, wherein the P source comprises at least one of Li₃PO₄, AlPO₄, LiFePO₄, FePO₄, NH₄H₂PO₄ or (NH₄)₂HPO₄.

11. The preparation method of the lithium nickel manganate positive electrode material according to claim 6, wherein the precursor has a molecular formula of Ni_{β}Mn_{2-β}(OH)₄, wherein 0.4≤β≤0.6; the precursor has at least one of the following properties that
the precursor has a D50 of 2-8µm;
the precursor has a specific surface area of 10-30m²/g; and
the precursor has a tap density of 0.8-1.5g/cm³.

12. The preparation method of the lithium nickel manganate positive electrode material according to claim 6, wherein that the single-crystal dispersant comprises at least one of V₂O₅, NH₄VO₃, Nb₂O₅, LiNbO₃, Ta₂O₅, LiTaO₃, H₂MoO₄, (NH₄)₂MoO₄, H₂WO₄ or WO₃.

13. The preparation method of the lithium nickel manganate positive electrode material according to claim 6, wherein a molar ratio of the precursor to the lithium source is 1:(0.5-1.1); and an additive amount of the single-crystal dispersant is 0.1%-1% of a mass of the precursor.

14. The preparation method of the lithium nickel manganate positive electrode material according to claim 6, wherein the atmospheric environment has an oxygen concentration of 15%-40%.

15. The preparation method of the lithium nickel manganate positive electrode material according to claim 6, wherein the first sintering is: heating from room temperature up to 800-1000°C at a rate of 1-5°C/min, calcining for 6-15h, and then cooling down to 600-800°C at a rate of 0.1-2°C/min, keeping the temperature for 1-10h, and finally, naturally cooling down to the room temperature.

16. The preparation method of the lithium nickel manganate positive electrode material according to claim 6, wherein the high single-crystal dispersion material has a BET of 0.3-0.5m²/g.

17. The preparation method of the lithium nickel manganate positive electrode material according to claim 6, wherein the second sintering is: heating from room temperature up to 300-600°C at a heating rate of 1-5°C/min, calcining for 6-15h, and then naturally cooling down to the room temperature.

18. A lithium battery, having the lithium nickel manganate positive electrode material according to any one of claims 1 to 5; or having the lithium nickel manganate positive electrode material prepared using the method according to any one of claims 6 to 17.

19. An electrical device, having the lithium battery according to claim 18.

20. An electric vehicle, having the lithium battery according to claim 18.
